# EUROPEAN PATENT APPLICATION

(11) **EP 2 557 310 A2**
(43) Date of publication of application: **13.02.2013**
(21) Application number: 12179478.8
(22) Date of filing: 07.08.2012
(51) Int. Cl.: F03B 17/02

(54) **Hydraulic generating apparatus and hydraulic generating system**

(30) Priority: 09.08.2011 JP 2011173731; 12.09.2011 JP 2011198909; 13.10.2011 JP 2011225571; 30.11.2011 JP 2011262762
(71) Applicant: Shinohara, Tooru, Yokosuka-shi, Kanagawa 240-0107 (JP)
(72) Inventor: Shinohara, Tooru, Yokosuka-shi, Kanagawa 240-0107 (JP)
(74) Representative: Bloor, Sam

(57) **Abstract**

A hydraulic generating apparatus comprises a water tank (1), a float (3), a linear-rotation conversion mechanism (4), and a generator (5). Water can be supplied into and discharged from the water tank (1). The float (3) is arranged to float in the water tank (1), and it moves up and down in accordance with a fluctuation in water surface level. The linear-rotation conversion mechanism (4) comprises a male screw shaft (41) and a female screw body (42). The male screw shaft (41) is rotatably supported, the female screw body (42) is screwed together with the male screw shaft (41) and interlocks with linear movement when the float (3) moves up and down, and the male screw shaft (41) is rotated by a linear displacement at the time of this interlocking. The generator (5) is driven by the rotation of the male screw shaft (41).

## Description

### BACKGROUND OF THE INVENTION

### 1. Field of the Invention

The present invention relates to a hydraulic generating apparatus which generates power by utilizing hydraulic power and a hydraulic generating system using this apparatus.

### 2. Description of the Related Art

There is known that a floating boat is floated in a dock where seawater can be flowed in or out by a difference in tidal level, a pinion including a pinion shaft is protruded on a side surface of the floating boat, a rack that meshes with the pinion is provided on the dock side, the pinion is rotated by upward or downward movement of the floating boat, and the number of revolutions of the pinion is increased by a speed increasing mechanism to drive a generator, whereby power is generated by utilizing a difference in tidal level (see, e.g., Patent Document 1).

On the other hand, there is also known that a water surface in an embankment is set equal to an external sea surface, a generating boat provided with a generator mechanism and a motor mechanism, and a float that is hanged from the generating boat so as to allow its upward or downward movement and is moved up or down by a reversing mechanism in an opposite direction of the upward or downward movement of the generating boat are provided in the embankment, the upward movement of the generating boat is converted into rotational movement by using a communication mechanism including, e.g., an arm lever and a transmission lever and power is generated at the time of rising tide, and the float is moved up and power is generated through an elevating mechanism at the time of falling tide (Patent Document 2).

Patent Document 1: Japanese Unexamined Patent Application Publication No. Hei 10-274145
Patent Document 2: Japanese Unexamined Patent Application Publication No. Hei 02-301674

However, since the former conventional technology uses the rack and pinion mechanism, it is difficult to obtain the number of revolutions and torque required for driving the generator with high conversion efficiency. According to the latter conventional technology, the configuration is complicated, fabrication is difficult, and a cost is increased. In both the conventional technologies, since the generating facility is mounted in the boat floating on the wafer surface, a configuration for taking out generated power to the outside is required, and maintenance of the entire facility has a problem to be solved.

Further, the conventional technologies aim at tidal generation alone, and they cannot be adapted to various water sources such as river water or tap water. Furthermore, there are many large and small demands in regard to scales of generation capabilities, but it is difficult for the conventional technology to respond to various generation capabilities.

### SUMMARY OF THE INVENTION

It is an object of the present invention to provide a hydraulic generating apparatus which has a simple configuration, easily converts linear movement into rotational movement, has high reliability of operations, and can be easily adapted to various water sources and various generation capabilities based on a novel combination of a float that floats on a water surface in a water tank and a linear-rotation conversion mechanism that converts linear movement of the float into rotational movement, and to a hydraulic generating system using this apparatus.

The hydraulic generating apparatus according to the present invention comprises a water tank, a float, a linear-rotation conversion mechanism, and a generator. Water can be supplied to and discharged from the water tank. The float is arranged to float in the water tank, and it moves up and down with a fluctuation in water surface involved by water supply or drainage to or from the water tank. The linear-rotation conversion mechanism comprises a male screw shaft and a female screw body. The male screw shaft is rotatably supported. The female screw body is screwed together with the male screw shaft, interlocks with linear movement when the float moves up and down, and rotates the male screw shaft based on a linear displacement at the time of interlocking. The generator is driven by the rotation of the male screw shaft and generates electricity.

According to the hydraulic generating apparatus of the present invention, since the female screw body is interlocked with the linear movement at the time of upward or downward movement of the float by using the linear-rotation conversion mechanism comprising the male screw shaft and the female screw body screwed together with the fame screw shaft, the male screw shaft is rotated in accordance with the linear movement of the female screw body, and the generator is driven to generate power, it is possible provide the hydraulic generating apparatus that has simple configuration, easily converts the linear movement into the rotational movement, has the enhanced reliability of operations, and can be adapted to various water sources and various generation capacities, and also provide the hydraulic generating system.

### BRIEF DESCRIPTION OF THE DRAWINGS

FIG. 1 is a front longitudinal cross-sectional view of a first embodiment of a hydraulic generating apparatus according to the present invention;
FIG. 2 is a cross-sectional view taken along a line II-II' in FIG. 1;
FIG. 3 is a cross-sectional view taken along a line III-III' in FIG. 1;
FIG. 4 is a cross-sectional view taken along a line IV-IV' in FIG. 1;
FIG. 5 is a cross-sectional view taken along a line V-V' in FIG. 1;
FIG. 6 is (a) an enlarged transverse cross-sectional view and (b) an enlarged primary part longitudinal cross-sectional view showing a linear-rotation conversion mechanism of the hydraulic generating apparatus according to an embodiment of the present invention;
FIG. 7 is a front longitudinal cross-sectional view of a second embodiment of a hydraulic generating apparatus according to the present invention;
FIG. 8 is a partially cutaway side cross-sectional view of the same apparatus;
FIG. 9 is a front longitudinal cross-sectional view of a third embodiment of a hydraulic generating apparatus according to the present invention;
FIG. 10 is a front longitudinal cross-sectional view of a fourth embodiment of a hydraulic generating apparatus according to the present invention;
FIG. 11 is a front longitudinal cross-sectional view of a fifth embodiment of a hydraulic generating apparatus according to the present invention;
FIG. 12 is a cross-sectional view taken along a line II-II' in FIG. 11;
FIG. 13 is a cross-sectional view taken along a line III-III' in FIG. 11;
FIG. 14 is a front longitudinal cross-sectional view of a sixth embodiment of a hydraulic generating apparatus according to the present invention;
FIG. 15 is a front longitudinal cross-sectional view of a seventh embodiment of a hydraulic generating apparatus according to the present invention;
FIG. 16 is a schematic layout of a first embodiment of a hydraulic generating system according to the present invention;
FIG. 17 is a timing chart of one cycle of water supply and drainage in the same system;
FIG. 18 is a schematic layout of a second embodiment of a hydraulic generating system according to the present invention;
FIG. 19 is a front cross-sectional view of a third embodiment of a hydraulic generating system according to the present invention; and
FIG. 20 is a timing chart for explaining an interlocking operation of each hydraulic generating apparatus in the same system.

### DETAILED DESCRIPTION OF THE PREFERRED EMBODIMENTS

### [First Embodiment of Hydraulic Generating Apparatus]

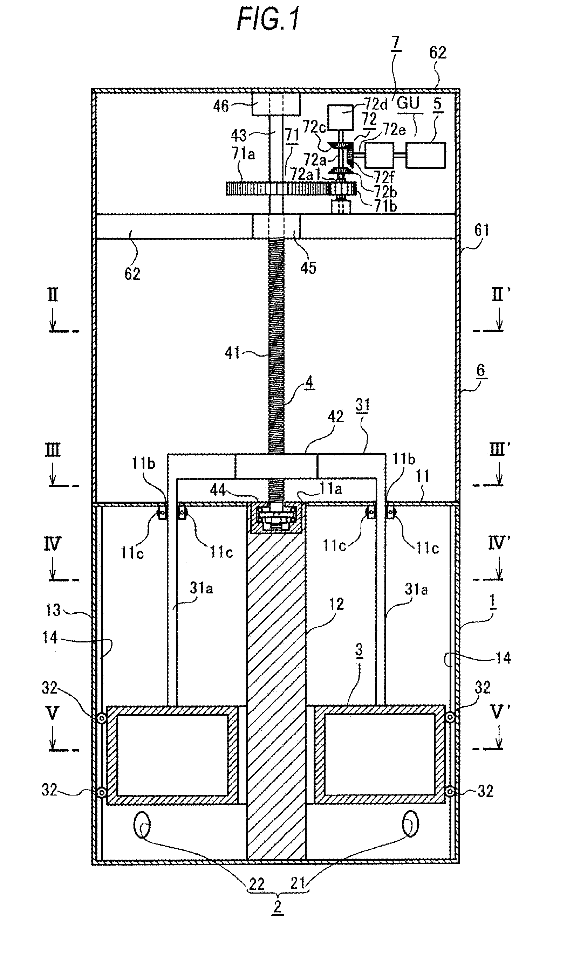

As described below, in a first embodiment according to the present invention, as show in FIG. 1, a hydraulic generating apparatus comprises a water tank 1, water supplying/draining means 2, a float 3, a linear-rotation conversion mechanism 4, and a generator 5. This embodiment is obtained by embodying the present invention according to a hydraulic generating apparatus and can be used when embodying a hydraulic generating system according to the present invention. Each constituent element will now be described with reference to FIG. 1 to FIG. 6.

### [Water Tank 1]

As shown in FIG. 1, the water tank 1 includes the water supplying/draining means 2, and it is configured to enable supplying water into a cup-like water tank main body 13 and discharging water stored inside. When water is supplied into the water tank 1, a water level of the water stored in the water tank 1 rises to a predetermined height. It is to be noted that the predetermined height in this case means a height to which the later-described float 3 is allowed to move up in the water tank 1. Further, when the water stored to the predetermined height in the water tank 1 is discharged, the water level of the water is lowered to a predetermined height. It is to be noted that the predetermined height in this case means a height to which the later-described float 3 is allowed to move down, and substantially all of the water in the water tank 1 may be discharged. That is, a water surface in the water tank 1 moves up and down in accordance with water supply and drainage. However, the predetermined height of the water surface in the water tank 1 can be set to an appropriate value in the range allowed by the water tank 1.

### (Water Tank Main Body 13)

In the water tank 1, an internal volume and a shape of the water tank main body 13 are not restricted in particular. Further, an appropriate internal volume and an opening space of the water tank 1, e.g., a diameter and a height can be arbitrarily selected in accordance with a generation capacity. It is to be noted that the opening space of the water tank 1 can be selected in such a manner that a maximum area of the later-described float 3 which is introduced into the water tank 1 can be accommodated. Furthermore, the maximum area of the float 3 determines a magnitude of buoyancy to be obtained. Moreover, the height of the water tank 1 determines an amount of linear drainage volume of the float 3 in the vertical direction.

A constituent material of the water tank 1 is not restricted in particular. For example, it is possible to use an appropriate material like a metal such as steel or stainless steel, concrete, fiber-reinforced plastics reinforced by inorganic fibers of glass, carbon, a metal oxide or nitride, ceramics, or bricks, or use natural terrain to constitute the water tank 1. The water tank 1 has a cylindrical shape in the illustrated embodiment, and this is a preferred shape, but the water tank 1 may have a shape such as a polygonal cylindrical shape as desired.

Additionally, an upper lid 11 that closes an upper opening of the water tank main body 13 can be added to the water tank 1, whereby maintenance of the inside of the water tank 1 is facilitated and foreign particles such as dust can be prevented from entering the water tank 1. Further, for the purpose of maintenance, a non-illustrated manhole can be arranged on a side surface of the water tank 1.

In the illustrated embodiment, as shown in FIG. 1 to FIG. 3, a plurality of openings 11a and 11b equally arranged on a central portion and a circle concentric to the center are formed in the upper lid 11. In the opening 11a on the central portion, an upper end of a columnar support 12 is exposed, and a later-described bearing 44 is embedded in this portion. The bearing 44 rotatably supports a lower portion of a male screw shaft 41 of the later-described linear-rotation conversion mechanism 4 while avoiding movement of the male screw shaft 41 in the longitudinal direction. Later-described interlocking means 31 extending from the float 3 to the outside of the water tank 1 is movably inserted into the plurality of equally arranged openings 11b. Each of the plurality of openings 11b has, e.g., a square shape, and each roller bearing 11c is arranged to face each side so that smooth insertion of the interlocking means can be aided and linear movement in the vertical direction can be smoothly carried out while avoiding rotation of the float 3.

Further, in the embodiment shown in FIG. 1, in the water tank 1, the columnar support 12 is vertically erected from the center of the bottom portion and reaches the opening 11a of the upper lid 11. It is to be noted that the water tank 1 can be formed into a donut-like shape as desired. If the water tank 1 is formed into such a shape, since a central window portion of the donut-like shape is provided on the outer side of the water tank 1, the bearing 44 of the linear-rotation conversion mechanism 4 can be arranged in this portion. However, as contrasted to the above-described conformation, the linear-rotation conversion mechanism 4 can be arranged in such a manner that it is immersed in water in the water tank 1. Therefore, according to the present invention, as a relationship between the shape of the water tank 1 and the linear-rotation conversion mechanism 4, various conformations can be adopted, and hence it can be understood that this relationship is not restricted in particular.

Further, in the water tank 1, to stop the later-described float 3 at a predetermined position in the water tank 1, it is possible to arrange a position sensor that detects a lower stop position and an upper stop position of the float 3 and a mechanical lock mechanism (both the members are not shown) for the float 3. Furthermore, a detection output from the position sensor can be linked with controlling means (not shown) for controlling, e.g., water supply and drainage. It is to be noted that the lower stop position and the upper stop positions are positions of the float 3 when the water surface is provided at a predetermined lower limit height and a predetermined upper limit height in advance. Although the lower limit height includes a water level 0, when the float 3 floats preferably at the lower limit height, the float 3 rapidly starts moving up at the time of the next water supply, and hence a generation pause period can be minimized. Moreover, the mechanical lock mechanism is means for mechanically locking the float 3 in the vicinity of, e.g., its upper limit height, and it can be used when, e.g., discharging water in the water tank 1 and performing maintenance of the inside.

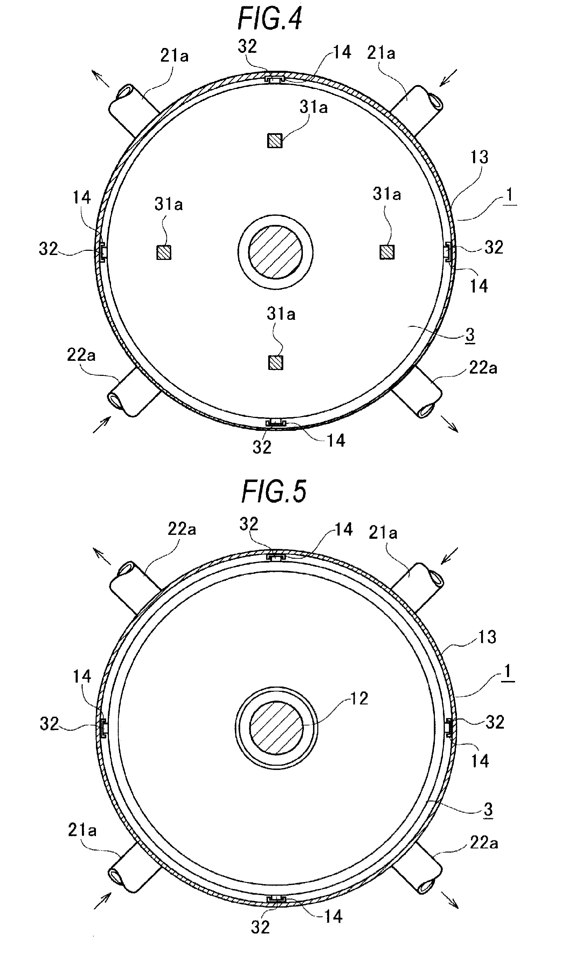

Additionally, the water tank 1 is allowed to have guide rails 14 arranged on an inner wall surface thereof. The guide rails 14 guide the float 3 to smoothly move up and down in cooperation with later-described guide rollers 32 of the float 3. In the illustrated embodiment, since an inner surface of the water tank 1 has a circular shape, the four guide rails 14 are arranged at intervals of 90° as shown in FIG. 4 and FIG. 5.

### (Water Supplying/draining Means 2)

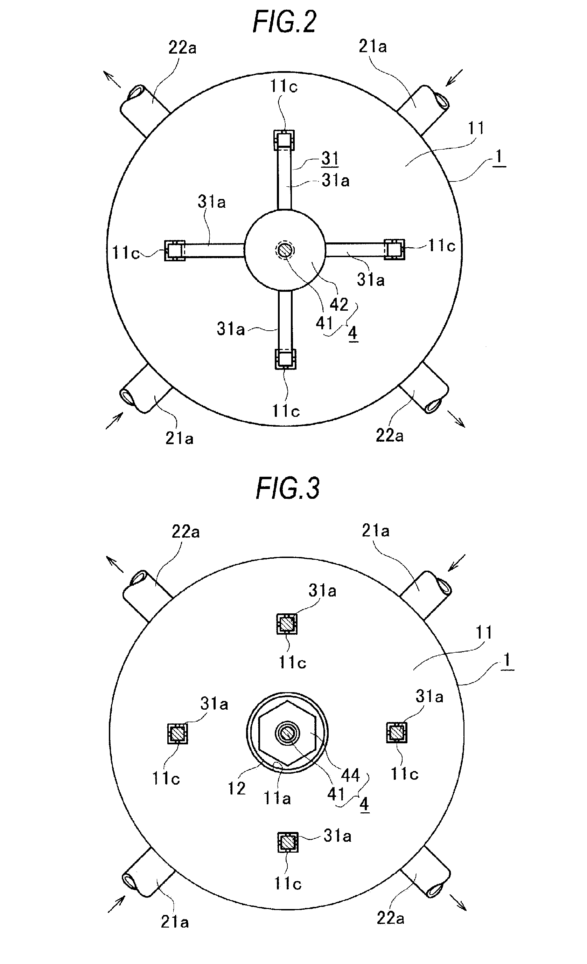

The water supplying/draining means 2 is means for enabling water supply into the water tank 1 and drainage. Further, the water surface in the water tank 1 is raised by water supply, and then the water surface in the water tank 1 is lowered by drainage, whereby the water surface is cyclically and repeatedly moved up and down. In the illustrated embodiment, as shown in FIG. 2 and others, the water supplying/draining means 2 includes a pair of a water supply inlet 21 and a drainage outlet 22 which are independent from each other. In this case, the number of the water supply inlets 21 and the drainage outlets 22 can be freely set. Furthermore, a single water supply/drainage port may be provided as desired so that water supply and drainage are switched in terms of time.

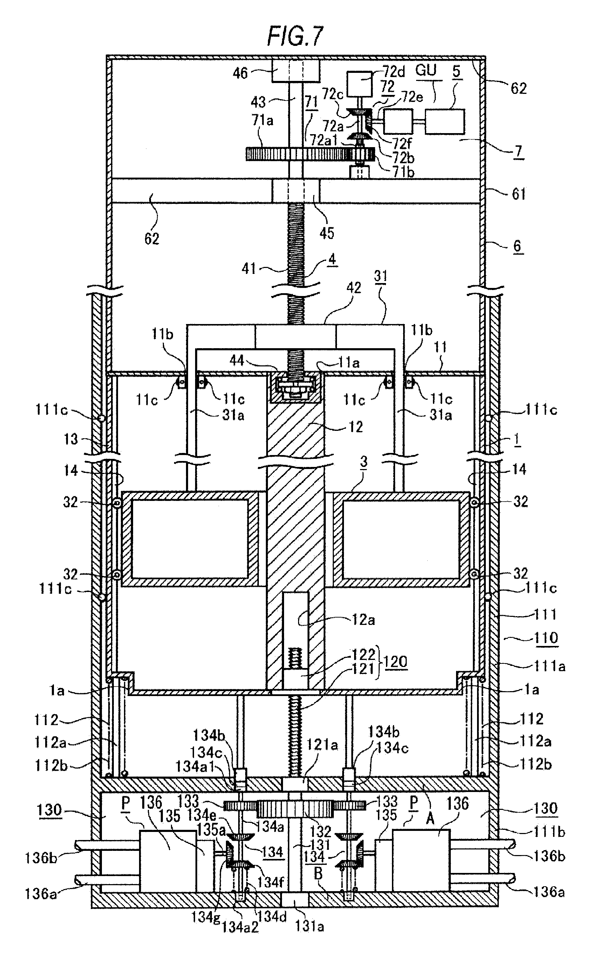

Although the water supply inlet 21 is means for supplying water into the water tank 1 and moving up the float 2 in the water tank 1, increasing a water supply capability per unit time as much as possible is desirable. In this case, not only the water surface at the time of water supply has no difficulty in exceeding the upper surface of the float 3, but also a rising speed of the float 3 in this case may be increased at a maximum. It is to be noted that, when the water supply inlet 21 communicates with a water collecting portion 8 shown in FIG. 7 through a pipe, it is preferable for a head, i.e., a hydraulic pressure between the water supply inlet 21 and the water collecting portion 8 to be set to a value that enables supplying water into the water tank 1 with sufficient motion energy, i.e., hydraulic power irrespective of a height in the allowable range at which the water surface in the water tank 1 is provided. It is to be noted that the pipe functions as a water supply pipe 21a with respect to the water supply inlet 21.

Furthermore, when the plurality of, e.g., a pair of power supply inlets 21 are arranged to be apart from each other in a point symmetric relationship within the same horizontal plane on the inner surface of the water tank 1, this configuration is convenient to increase a water supplying speed. In the illustrated embodiment, the pair of water supply outlets 21 are arranged to face the water tank 1, i.e., at 180° intervals.

Although the drainage outlet 22 is means for discharging water in the water tank 1 to the outside and lowering the water surface, it is desirable to form the drainage outlet 22 so as to increase a drainage capability per unit time as high as possible. If the drainage outlet 22 is formed in this manner, not only there is no problem in reducing the water surface at the time of drainage to be lower than a lower end of the float 3, but also a falling speed of the float 3 can be increased at a maximum. Additionally, a drain pipe 22a is connected to the drainage outlet 22. It is to be noted that, when the drainage outlet 22 is arranged at a lower portion of the water tank 1, water in the water tank 1 can be easily discharged to the outside through the drain pipe 22a.

### [Float 3]

The float 3 is arranged so as to enable its linear movement toward an upper limit direction while floating on the water surface in the water tank 1. That is, the float 3 moves up and moves down in accordance with a fluctuation in water surface in the vertical direction involved by water supply into the water tank 1 and drainage. Further, to give desired driving force to the linear-rotation conversion mechanism 4 when the floats 3 moves up, the float 3 is configured so as to have desired buoyancy. To realize this configuration, a displacement of the float 3 can be set to a desired value. It is to be noted that the buoyancy of the float 3 is equal to a mass of water that has been pushed aside when the float 3 floats on the water surface. On the other hand, to give desired driving force, i.e., gravity to the linear-rotation conversion mechanism 4 when the float 3 moves down, the float 3 is configured in such a manner that the float 3 has a desired mass. To realize this, setting a mass of the float 3 to a desired value can suffice.

Therefore, when the driving force of the linear-rotation conversion mechanism 4 when the float 3 moves up is set equal to that when the float 3 moves down, the generated power can be equalized. To achieve this equalization, it is good to configure the float 3 in such a manner that the buoyancy and the mass of the float 3 can become substantially equal to each other. In the present invention, a specific configuration for achieving this state is not restricted in particular but, for example, a ballast may be added to the inside or the outside of the float 3, or a wall thickness of the float 3 may be increased as shown in FIG. 1. As a result, a displacement mass of the float 3 grows, and subduction from the water surface increases. Therefore, in the present invention, when the float 3 is configured in such a manner that its upper portion exposed on the water surface, the buoyancy and the mass are balanced, which is preferable.

Furthermore, to interlock the female screw body 42 of the later-described linear-rotation mechanism 4 with the linear movement at the time of upward and downward movements of the float 3, the float 3 is allowed to include interlocking means 31. That is, the interlocking means 31 is means for transmitting the linear movement of the float 3 to the female screw body 42 of the linear-rotation conversion mechanism 4 and allowing the female screw body 42 to perform the linear movement. However, a configuration of the interlocking member 31 is not restricted in particular. For example, the float 3 can be directly coupled with the female screw body 42. Moreover, the interlocking member 31 may be a link mechanism or a lever mechanism whose movement ratio is not 1:1 as desired.

In the illustrated embodiment, the interlocking means 31 directly couples the float 3 in the water tank 1 with the female screw body 42 of the linear-rotation conversion mechanism 4 arranged outside the water tank 1. That is, one end of the interlocking means 31 is fixed to the upper portion of the float 3, an intermediate portion of the same pieces the upper lid 11 of the water tank 1 so as to allow vertical movement, and the other end of the same is extended to the outside of the water tank 1 and connected to the female screw body 42 of the linear-rotation conversion mechanism 4.

Moreover, since the float 3 basically uses the interlocking member 31 when it moves up and down in accordance with a change in water surface, the float 3 is prevented from rotating with respect to the water tank 1. That is, the interlocking means 3 is constituted of four key-shaped members 31a. Additionally, lower end portions of the respective key-shaped members 31a are fixed at intervals of 90° along a virtual circle with the center of gravity on the upper surface of the float 3 at the center. Further, each key-shaped member 31a is vertically erected from the upper surface of the float 3, and an intermediate portion thereof moderately pierces the upper lid 11. It is to be noted that a sliding member 11c, e.g., a roller is preferably arranged to an upper piercing portion to smoothen the linear movement of the float 3 so that power loss of the linear movement cannot be reduced. Furthermore, the bent other end portions of the key-shaped members 31a are connected to an outer peripheral portion of the female screw body 42 as an input end of the linear-rotation conversion mechanism 4 at intervals of 90°. The float 3 is not rotated between the interlocking means 31 having the above-described configuration and the upper lid 11 of the water tank 1 and free from the line movement, and the linear-rotation conversion mechanism 4 is configured to be arranged at the center of gravity of the float 3.

Moreover, the shape of the float 3 is not restricted in particular, and the shape of the water tank 1 is not restricted in particular either. In the illustrated embodiment, although the float has the donut-like shape when seen in a planar view, since the columnar support 12 is arranged in the water tank 1, this shape is adopted only for the purpose of avoiding this columnar support. However, when the float 3 has a circular or annular shape, its center of gravity can be easily found.

Additionally, when the water surface moves down, the float 3 linearly moves downward in accordance with this movement of the water surface. When the float 3 linearly moves, the float 3 acts so as to rotate the linear-rotation conversion mechanism 4 by its mass or displacement gravity. Therefore, it is desirable for the float 3 to have a mass equal to the buoyancy at the time of water surface elevation in terms of equalizing an electric generating capacity at the time of upward movement of the float 3 and that at the time of downward movement of the float 3. On the other hand, at the time of water surface drop, the drainage gravity of the float 3 can be used for generation when lowering of a water level is synchronized with lowering of the float 3, and the mass of the float 3 can be used for generation when drainage is accelerated and a lowering speed of the water level is higher than a lowering speed of the float 3.

### [Linear-rotation Conversion Mechanism 4]

The linear-rotation conversion mechanism 4 is a characteristic constituent portion of the hydraulic generating apparatus according to this embodiment, and it is configured to have the male screw shaft 41 and the female screw body 4 screwed together with this male screw shaft 41. Additionally, the male screw shaft 41 is rotatably supported. On the other hand, the female screw body 42 is configured to linearly move in association with linear movement at the time of upward movement and downward movement of the float 3 but prevented from being rotated. When the female screw body 42 linearly moves, since the male screw shaft 41 screwed into this member is rotated, linear-rotation conversion of movement can be performed. That is, in the present invention, the linear-rotation conversion mechanism 4 functions as a mechanism that converts linear movement into rotational movement. Further, when rotation of the male screw shaft 41 is transmitted to the later-described generator 5, this member can be driven to generate electricity.

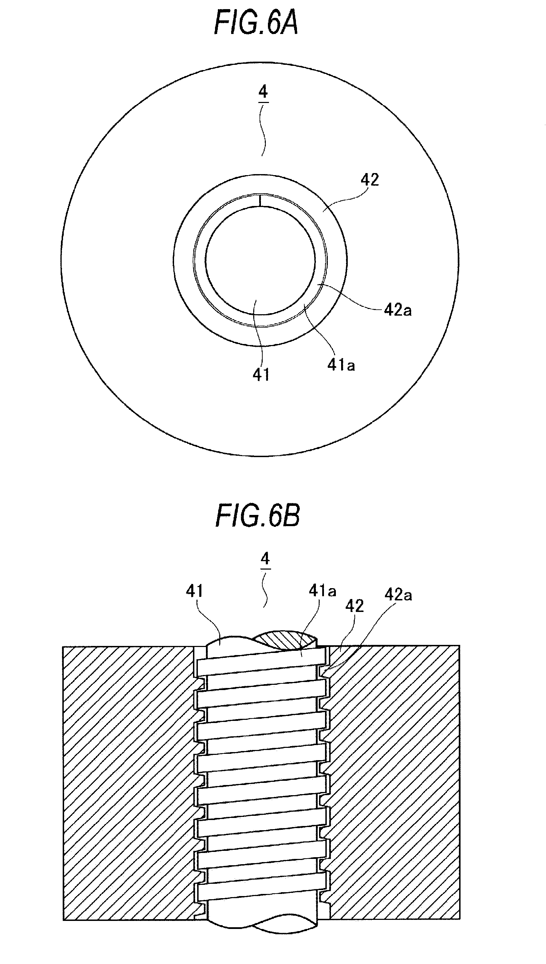

As shown in FIG. 6, the male screw shaft 41 has a male screw groove 41a continuously formed on a portion having a necessary effective length. It is to be noted that, in the embodiment shown in FIG. 1, a gear shaft 43 extended from an upper end of the male screw shaft 41 in the drawing, i.e., a bearing 45 toward the upper side in a coaxial relationship is integrally extended. It is to be noted that, in the gear shaft 43, the male screw groove 41a is not formed on the outer periphery thereof, and a later-described first gear 71a is mounted.

As shown in FIG. 6, the female screw body 42 can be also referred to as a nut and has a through hole formed at the center, and a female screw groove 42a is formed on an inner surface thereof. Furthermore, the female screw groove 42a of the female screw body 42 is screwed together with the male screw groove 41a of the male screw shaft 41, and the female screw body 42 can slide and move along the longitudinal direction of the male screw shaft 41. It is to be noted that, when the female screw body 42 slides along the male screw shaft 41 without rotating, the male screw shaft 41 rotates.

Respective lead angles of the male screw groove 41a of the male screw shaft 41 and the female screw groove 42a of the female screw body 42 are not restricted in particular in the present invention. When the lead angles are relatively large, sliding resistance (frictional resistance) becomes relatively small, and the number of revolutions obtained per unit linear distance becomes relatively small, but torque becomes relatively large. Contrarily, when the lead angles are relatively small, the sliding resistance (the frictional resistance) becomes relatively large, and the number of revolutions obtained per unit linear distance becomes relatively large, but torque to be obtained becomes relatively small. However, in the linear-rotation conversion mechanism 4, it is well-known that the linear-rotation conversion mechanism 4 can adopt known means for reducing the sliding resistance, e.g., adding a ball bearing to the female screw groove 42a of the female screw body 42. Further, when this means is appropriately adopted, even if the lead angles of the male screw shaft 41 and the female screw body 42 are relatively small, both the number of revolutions obtained per unit linear distance and torque can be relatively increased. Therefore, taking the above-described circumstances into consideration, in this embodiment, approximately 10° or a larger angle can suffice as the lead angle of each of the male screw shaft 41 and the female screw body 42. However, the lead angle falling within the range of approximately 15 to 25° is preferable.

Further, the linear-rotation conversion mechanism 4 can be arranged both the inside and the outside of the water tank 1 as described above. When this mechanism is arranged inside the water tank 1, the configuration of the hydraulic generating apparatus becomes simple. Furthermore, when this mechanism is arranged outside the water tank 1, durability of the linear-rotation conversion mechanism 4 is improved, maintenance can be facilitated, and water is no longer contaminated by operations of the linear-rotation conversion mechanism 4.

A position that the linear-rotation conversion mechanism 4 is arranged with respect to the water tank 1 is not generally restricted in particular in the present invention. However, this position is preferably the center of gravity of the water tank 1. When the linear-rotation conversion mechanism 4 is arranged at the center of gravity in this manner, using the single linear-rotation conversion mechanism 4 alone can suffice, and operations of the linear-rotation conversion mechanism 4 are stabilized at a maximum.

Moreover, in the linear-rotation conversion mechanism 4, when the female screw body 42 interlocks with the linear movement of the float 3 in the vertical direction with the interlocking ratio of 1:1, an effective length of the male screw shaft 41 equal to a linear movement distance of the float 3 in the vertical direction can suffice. However, for example, like a situation where the female screw body 42 interlocks with the linear movement of the float 3 through a link mechanism or a lever mechanism, when the interlocking ratio of the float 3 and the female screw body 42 is smaller than 1:1, the effective length of the male screw shaft 41 may be small with the same ratio. Contrarily, when the interlocking ratio is large than 1:1, the effective length of the male screw shaft 41 must be increased with the same ratio. In the illustrated embodiment, the interlock ratio is 1:1, and the screw shaft 41 of the linear-rotation conversion mechanism 4 is raised upward from the upper surface of the water tank 1.

Means for rotatably supporting the male screw shaft 41 of the linear-rotation conversion mechanism 4 is not restricted in particular in the present invention. In the illustrated embodiment, both ends of the male screw shaft 41 are rotatably supported while avoiding movement in the axial direction. It is to be noted that a cross section of the bearing 44 is schematically shown, and the bearing 45 can have substantially the same configuration. Additionally, as shown in FIG. 1 and FIG. 3, the bearing 44 is fixed, e.g., embedded in an upper end of the columnar support 12 raised from the central part of the bottom portion in the water tank 1. As shown in FIG. 1, the bearing 45 is fixed to a later-described outer cover 6 through a bracket 62. It is to be noted that the outer cover 6 is arranged on the upper side of the water tank 1, and it is constituted of a cylindrical outer cover main body 61 and a lid body 62 arranged at an upper end of the outer cover main body 61.

### [Generator 5]

The generator 5 is driven by torque obtained from the male screw shaft 41 by converting the linear movement of the float 3 into the rotational movement using the linear-rotation conversion mechanism 4, and it generates electric power. The generator 5 may be directly coupled with the male screw shaft 41 to be driven, or it may be indirectly driven. In the illustrated embodiment, the generator 5 has the latter conformation, and it is configured to be indirectly driven through a later-described torque transmitting portion 7. Furthermore, a type of the generator 5 is not restricted in particular. For example, a synchronous generator, an induction generator, or a direct-current generator can be appropriately selected and used.

### (Torque Transmitting Portion 7)

The torque transmitting portion 7 is means for taking out torque generated in the male screw haft 41 of the linear-rotation conversion mechanism 4 with the linear movement based on the buoyancy and the mass of the float 3 and driving the generator 5 with a necessary number of revolutions. Moreover, functions of the torque transmitting portion 7 are constituted of a torque take out portion 71, a rotational direction switching portion 72, and a speed increaser 73. Each of the functional portions will now be described hereinafter.

The torque takeout portion 71 is a function for taking torque from the rotating male screw shaft 41 of the linear-rotation conversion mechanism 4, and its specific configuration is not restricted in particular in the present invention. For example, like the embodiment shown in FIG. 1, this portion is constituted of first and second gears 71a and 71b. The first gear 71a is fixed to a gear shaft 43 integrally extended from the upper end of the male screw shaft 41 in the drawing. It is to be noted that the upper end of the gear shaft 43 in FIG. 1 is rotatably supported by a bearing 46 arranged on the inner surface of the lid body 62 of the outer cover 6. The second gear 71b meshes with the first gear. Therefore, as rotation of the male screw shaft 41, torque generated by upward movement and downward movement of the float 3 is taken from the second gear 71b by the torque takeout portion 71 constituted of the first and second gears 71a and 71b.

Although the male screw shaft 41 rotates in opposite directions depending on upward movement and downward movement, the rotational direction switching portion 72 is functioning means for always switching rotation of the generator 7 to a predetermined direction in such a case. A specific configuration is not restricted in particular in the present invention. Various known rotational direction switching means can be appropriately selected used. In the illustrated embodiment, the rotational direction switching portion 72 is constituted of a thrust shaft 72a, a pair of opposed drive bevel gears 72b and 72c, a thruster 72d, a driven shaft 72e, and a driven bevel gear 72f, for example.

The thrust shaft 72a is arranged in parallel with the male screw shaft 42 of the linear-rotation conversion mechanism 4, and a spline groove 72a1 is formed on an outer surface of a part thereof in the longitudinal direction. Further, internal teeth of the second gear 71b are spline-coupled with the spline groove 72a1. It is to be noted that, although not shown in FIG. 1, a position of the second gear 71b in the vertical direction is limited so that mesh with the first gear 71a cannot be released even though the thrust shaft 72a moves up and down by the thruster 72d. Furthermore, the thrust shaft 72a is made immovable so as to enable thrusting motion for a predetermined distance in the axial direction.

The pair of opposed drive bevel gears 72b and 72c are fixed and attached to the thrust shaft 72a in a state that bevel teeth inclined at 45° face each other at an interval. Moreover, the pair of drive bevel gears 72b and 72c are apart from each other for a length that enables the later-described driven bevel gear 72f to selectively mesh with one of the drive bevel gears 72b and 72c at the time of thrusting of the thrust shaft 72a.

The drive shaft 72e is arranged to be orthogonal to the thrust shaft 72a and rotatably made immovable. It is to be noted that an input shaft of the later-described speed increaser 73 can function as the driven shaft 72a.

The driven bevel gear 72f is fixed and attached to the drive shaft 72e and meshes with one of the pair of drive bevel gears 72b and 72c, and torque of the male screw shaft 41 is transmitted to this gear through the torque takeout portion 71 and the rotational direction switching portion 72, thereby rotating the driven shaft (the input shaft) 72e.

The thruster 72d is means for sliding the thrust shaft 72a in the axial direction and allowing necessary one of the pair of drive bevel gears 72b and 72c to mesh with the driven bevel gear 72f. Additionally, for example, remote control and interlocking control are enabled by using remote controlling means such as an electric operation or a hydraulic operation.

The speed increaser 73 is means which is interposed between the rotational direction switching portion 72 and the generator 5, increases the number of revolutions obtained from the rotational direction switching portion 72 to the number of revolutions that enhances efficiency of the generator 5, and performs output from the output shaft 73a to drive the generator 5. It is possible to adopt a speed increaser using a known planet gear.

### [Generation Unit GU]

As described above, it is possible to configure a generation unit GU including the torque takeout portion 71, the rotational direction switching portion 72, the speed increaser 73, and the generator 5 as one unit. That is, the plurality of generator units GU can be arranged around the first gear 71a while sharing the first gear 71a in accordance with a magnitude of torque obtained form the male screw shaft 41 of the linear-rotation conversion mechanism 4 as desired.

### [Any Other Configuration of Hydraulic Generating Apparatus]

In addition to the above-described constituent portions, the embodiment of the hydraulic generating apparatus according to the present invention can comprise starting means (not shown) as desired. The starting means is means for temporarily aiding movement of the float 3 when the float 3 which has moved up to a predetermined height moves down by gravitational force acting on the mass of the float 3 itself with drainage in the water tank 1. For example, a cell motor or the like anchored by an electromagnetic field type commutator can be used as the starting means. In this case, in the illustrated embodiment, a small-diameter gear can be attached to the starting means, and this gear can mesh with the first gear 71a of the torque takeout portion 71 depicted in FIG. 1. Further, the starting means can be used for aiding floatation of the float 3 at the time of water supply as desired. It is to be noted that a battery can be charged with a part of generated power in this embodiment and the starting means can urge this battery as a power supply. However, another power supply can be used as desired.

### [Operation of Hydraulic Generating Apparatus in First Embodiment]

An operation of the hydraulic generating apparatus in the illustrated embodiment will now be described.

First, when water supply into the water tank 1 is started by the water supplying/draining means 2, a water level in the water tank 1 rises, the float 3 accommodated inside floats on a water surface, and the float 3 moves up with an increase in water surface. At the time of this upward movement, the buoyancy of the float 3 is interlocked with the female screw body 42 of the linear-rotation converting means 4 through the interlocking means 31. At this time, the female screw body 42 moves in the longitudinal direction of the male screw shaft 41 without rotating. At the time of this movement, since the float 3 does not rotate and the female screw body 42 is pushed up to linearly move by the buoyancy of the float 3, large force caused due to the buoyancy acts on the female screw body 42. As a result, the linear movement is converted, and the male screw shaft 41 rotates with large torque. This rotation drives the generator 5 through the gear shaft 43, the torque takeout portion 71, the rotational direction switching portion 72, the speed increaser 73, i.e., a torque transmitting portion 7, and hence the hydraulic generating apparatus continues a first generating operation while the float 3 is moving up.

Then, when drainage in the water tank 1 is started by the water supplying/draining means 2, a water level in the water tank 1 is lowered, and the float 3 accommodated inside moves down by its mass. Incidentally, at the time of drainage, the rotational direction switching portion 72 of the torque transmitting portion 7 switches the driven shaft 72e by using a non-illustrated control circuit, and hence the rotational direction is invariable. Therefore, when the float 3 moves down, the gravitational force acting on the float 3 allows interlocking of the female screw body 42 of the linear-rotation converting means 4 through the interlocking means 31. At this time, the female screw body 42 moves in a direction opposite to that in case of the upward movement in the longitudinal direction of the male screw shaft 41 without rotating. At the time of this movement, the female screw body 42 linearly moves in a direction along which it is pushed down with respect to the male screw shaft 41 by the gravitational force acting on the float 3. At this time, the large gravitational force acting on the float 3 functions with respect to the female screw body 42. As a result, the linear movement is converted, and the male screw shaft 41 rotates in a direction opposite to that at the time of the upward movement with large torque. This rotation drives the generator 5 in the same direction as that in the upward movement through the gear shaft 43, the torque takeout portion 71, the rotational direction switching portion 72, and the speed increaser 73, i.e., the torque transmitting portion 7, and hence the hydraulic generating apparatus continues the second generating operation while the float 3 is moving down.

Thereafter, generation can be continued by repeating the above-described operation with the alternate upward and downward movements of the water level in the water tank 1. It is to be noted that, since the linear-rotation conversion mechanism 4 is arranged at the center of gravity of the float 3, an influence of welter of the upwardly and downwardly moving float 3 on the generating operation can be reduced, and the mechanical balance can be improved as a whole. However, the linear-rotation conversion mechanism 4 can be arranged at a position other than the center of gravity of the float 3 as desired, and the plurality of linear-rotation conversion mechanisms 4 and generation units GU can be arranged in the float 3.

According to the above-described embodiment of the present invention, the hydraulic generating apparatus has the simple configuration, conversion of the linear movement into the rotational movement is facilitated, the reliability is high, the apparatus can be miniaturized for the generation capacity, and hence the small or large hydraulic generating apparatus having a desired generation capacity can be fabricated. Therefore, various requests about the generation capacity of the hydraulic generating apparatus can be met. It is to be noted that requests for the relatively small hydraulic generating apparatus of approximately 1 kW to approximately 1 MW can be preferably met in particular. Further, as a water source used for generation, it is possible to adopt various water sources, e.g., river water, tap water, well water, and spring water. Furthermore, the hydraulic generating apparatus according to this embodiment can be applied to tidal generation.

### [Second Embodiment of Hydraulic Generating Apparatus]

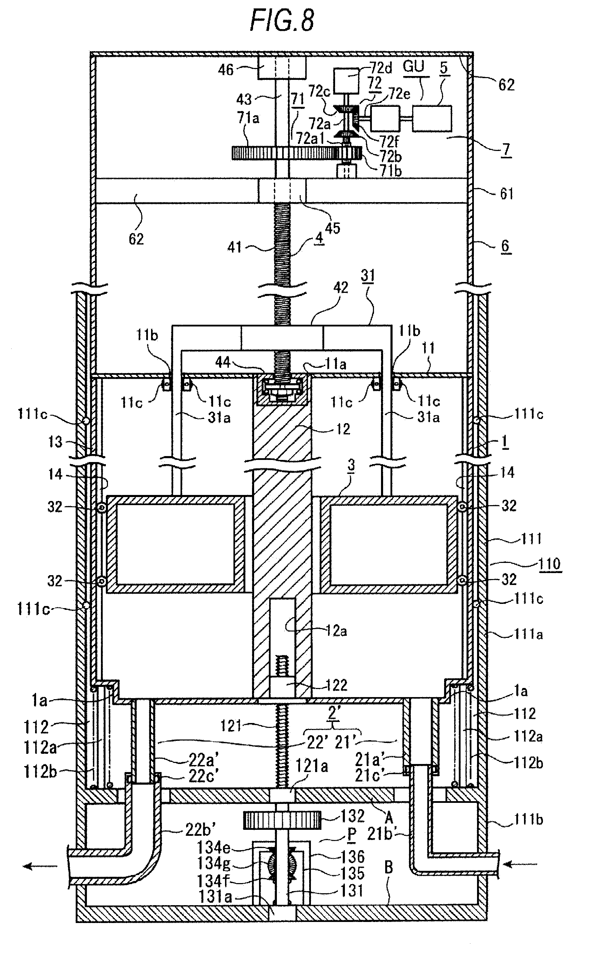

A second embodiment of a hydraulic generating apparatus will now be described with reference to FIG. 7 and FIG. 8. It is to be noted that like reference symbols denote parts equal to those in FIG. 1 to FIG. 6 to omit a description thereof.

In this embodiment, torque is taken out from upward and downward movements of a water tank 1 and used. Moreover, this embodiment comprises the water tank 1, water tank vertically moving means 110, linear-rotation converting means 120, and torque using means 130.

### [Water Tank 1]

The water tank 1 comprises water supplying/draining means 2' and enables supplying water into the water tank 1 and discharging water stored in this tank to the outside. Therefore, an entire mass of the water tank 1 including water stored therein changes in accordance with water supply and drainage. The water tank 1 is allowed to have any other functions. For example, like the first embodiment shown in FIG. 1, a float 3 can be arranged in the water tank 1. Additionally, the upward and downward movements of the float 3 involved by upward and downward movements of a water level in the water tank 1 are converted into rotational movement, and torque is taken out and used as a power source of generation.

In the illustrated embodiment, the water tank 1 comprises the water supplying/draining means 2' that does not obstruct the upward and downward movements of this tank itself, and it is configured to enable water supply and drainage. However, specific means for achieving this configuration is not restricted in particular since various known means can be selected and adopted. For example, as shown in FIG. 8, the water supplying/draining means 2' is constituted of a water supply pipe 21' and a drain pipe 22' each having a telescopic pipe configuration. It is to be noted that, in this embodiment, the water supply pipe 21' and the drain pipe 22' are symmetrically arranged on a bottom portion of the water tank 1 to sandwich the center in a direction orthogonal to a later-described pair of pump devices P.

The water supply pipe 21' comprises an outer pipe 21a extending from the bottom portion of the water tank 1 to the outside in a watertight manner and an inner pipe 21' which is fitted in this outer pipe 21a' through a seal structure 21c' so as to be retractable. Further, the inner tube 21b' is connected to a water source (not shown).

The drain pipe 22' comprises an inner pipe 22a extending from the bottom portion of the water tank 1 to the outside in a watertight manner and an outer pipe 22b that is retractably fitted on the outer side of this inner tube 22a through a seal structure 22c. Further, drainage is performed from the outer tube 22b to the outside.

### [Water Tank Vertically Moving Means 110]

The water tank vertically moving means 110 is means for moving the water tank 1 upward or downward in accordance with a change in mass of the water tank 1 involved by water supply into the water tank 1 and drainage. In regard to the upward and downward movements of the water tank 1, it is preferable to move upward and downward in a conformation that the downward movement is effected when the entire mass of the water tank 1 is increased and the upward movement is performed to return to an original position when the mass is reduced.

In the illustrated embodiment, the water tank vertically moving means 100 is configured to include a water tank holder 111 and a return mechanism 112.

The water tank holder 111 is configured to include a guide portion 111a that holds the water tank 1 from the outer side and guides it so that the water tank 1 can smoothly move up and down, a base portion 111b, and sliding means 111c. The water tank guide portion 111a is a portion that has a cylindrical shape or a frame-like shape that gently holds the water tank 1 from the outer side. The water tank 1 moves up and down in the water tank guide portion 111a. The base portion 111b is placed on the base of the water tank guide portion 111a and supports the water tank holder 111. Further, in the illustrated embodiment, a double-bottomed structure is formed, and an upper bottom portion A faces the bottom portion of the water tank 1. Furthermore, the later-described torque using means 130 and a part of the linear-rotation converting means 120 are arranged in a space between a lower bottom portion B and the upper bottom portion A. The sliding means 111c is means that is interposed between a side surface of the water tank guide portion 111a and a side surface of the water tank 1 and provides excellent sliding of the water tank 1, and it is configured by, e.g., supporting a roller on an inner surface of the water tank guide portion 111a.

The return mechanism 112 is means for raising the water tank 1 and returning it to its original position when an amount of water stored inside is increased by water supply, the mass of the entire water tank 1 is increased, the water tank 1 is moved down, and then the mass of the entire water tank 1 is reduced due to drainage.

In the illustrated embodiment, for example, using both a hydraulic cylinder 112a and a coil spring 112b enables configuring the return mechanism 112. An appropriate number of sets of the return mechanism 112 are arranged around the water tank 1 between a lower surface of the water tank 1 and the upper bottom portion A, for example, four sets are equally arranged at intervals of 90°. It is to be noted that, since the bottom portion of the water tank 1 receives and fixes an upper end portion of the return mechanism 112, a concave portion 1a having an appropriate depth is formed on a portion that receives the upper end portion. However, as the return mechanism 112, a satisfactory mechanism moves up the water tank 1 and returns it to its original position when the mass of the entire water tank 1 is increased, the water tank 1 moves down, and then the mass of the water tank 1 is reduced by drainage, and hence it can be understood that the return mechanism 112 is not restricted to the foregoing embodiment.

### [Linear-rotation Converting Means 120]

The linear-rotation converting means 120 is means for converting the upward and downward movements of the water tank 1 into rotational movement and taking out torque. An entire configuration of the linear-rotation converting means 120 is not restricted in particular. For example, it is preferable to arrange the linear-rotation converting means 120 at, e.g., the center of the bottom portion of the water tank 1.

In the illustrated embodiment, the linear-rotation converting means 120 is constituted of the same mechanism as the linear-rotation conversion mechanism 4 that converts the upward and downward movements of the float 3 into the rotational movement in the first embodiment. That is, the linear-rotation converting means 120 is mainly constituted of a male screw shaft 121 and a female screw body 122. Further, the female screw body 122 is fixed on the bottom portion of the water tank 1 so as to avoid rotation, and the male screw shaft 121 is rotatably supported on the base portion 111b of the water tank vertically moving means 110 by a bearing 121a and rotates in accordance with the upward and downward movements of the water tank 1. However, it is possible to adopt an input/output relationship that is opposite to that of the linear-rotation conversion mechanism 4 in the first embodiment as desired.

The illustrated embodiment will be again described. The central portion at the lower portion of the columnar support 12 of the water tank 1 is hollowed out to form a hollow portion 12a, and the female screw body 122 is arranged at the center of the bottom portion of the water tank 1 in a watertight relationship so as to communicate with hollow portion 12a. It is to be noted that a depth dimension of the hollow portion 12a is determined to enable entry of the screw shaft 121 into the hollow portion 12a in accordance with a maximum moving distance of the upper and lower movements of the water tank 1. A lower end of the male screw shaft 121 is rotatably supported on the upper bottom portion A of the water tank holder 111 by the bearing 21a. Therefore, when the water tank 1 moves up and down, the female screw body 122 moves together with the water tank 1 along the axial direction of the male screw shaft 121, whereby the male screw shaft 121 rotates without changing its position in the vertical direction. Therefore, the end of the male screw shaft 121 moves forward and backward in the hollow portion 12a in the water tank 1. A direction of the rotation of the male screw shaft 121 is reversed depending on the upward movement and the downward movement of the water tank 1.

### [Torque Using Means 130]

The torque using means 130 operates by using as driving force torque that is taken out after converted into the rotational movement by the linear-rotation converting means 120. A conformation of use of the torque is not restricted in particular. For example, the torque can be used directly for operating a machine such as a drawing pump. Furthermore, it can be used for driving a generator provided separately from the counterpart in the first embodiment and generating electricity.

In the illustrated embodiment, the torque using means 130 is a pump apparatus P comprising a rotary shaft 131, a first gear 132, a second gear 133, a rotational direction switching portion 134, a speed increaser 135, and a drawing pump 136. It is to be noted that the plurality of pump apparatuses P, which are, e.g., a pair in the drawing, can be arranged while sharing the rotary shaft 131 and the first gear 132. The rotary shaft 131 is integrated with the male screw shaft 121 of the linear-rotation converting means 120, and a lower end thereof is rotatably supported to a bearing 131a. The first gear 132 is fixedly attached to the rotary shaft 131 and has a relatively large tooth width. The second gear 133 is fixedly attached to a drive shaft 131 of the later-described rotational direction switching portion 134, has a narrower tooth width than the first gear 132, and constantly meshes with the first gear 132 even though a drive shaft 134a is displaced in the axial direction since the first gear 132 has the large tooth width.

The rotational direction switching portion 134 comprises the drive shaft 134a, an air pump 134b, a hydraulic pump 134c, a coil spring 134d, a pair of opposed bevel gears 134e and 134f, and an output bevel gear 134g. The drive shaft 134a can be displaced in the vertical direction and is rotatably supported by a pair of bearings 134a1 and 134a2 in FIG. 7. The air pump 134b pushes down the drive shaft 134 in tandem with the downward movement of the water tank 1. The hydraulic pump 134c functions as a shock absorber. When the water tank 1 moves and impetuses of the air pump 134b and the hydraulic pump 134c are lost, the coil spring 134d displaces the drive shaft 134a upward by elastic force. The pair of opposed bevel gears 134c and 134f are fixedly attached to the drive shaft 134a in such a manner that they face each other at an interval. The output bevel gear 134g meshes with one of the pair of opposed bevel gears 134e and 134f in accordance with displacement of the drive shaft 134a.

The speed increaser 135 comprises an input shaft 135a, and the output bevel gear 134g is fixedly attached to the input shaft 135a. Moreover, accelerated rotation can be obtained from a non-illustrated output shaft.

The drawing pump 136 is a pump driven by an output from the speed increaser 135 and comprises a water suction pipe 136a and a water pipe 136b. In this embodiment, a use of the drawing pump 136 is not restricted in particular. However, a preferred use is pumping up water discharged from the water tank 1 after use for generation and reusing this water for generation. Additionally, the pumped water in this case can be adapted to various purposes, and it can be adapted to, e.g., generation at the time of a general peak load when a generation capacity is large, but it can be adapted to the purpose of reducing an amount of water used for regular generation.

When using the drawing pump 136 for pumping up water, water is sucked from a water collecting portion with a small head of the water suction pipe 136a, and the drawing pump 136 pressurizes and supplies this water to the water pipe 136b. Further, the water pipe 136b is used to feed the water to the water collecting portion arranged at a position having a large head as seen from the hydraulic generating apparatus. Then, the water fed with the large head from the water collecting portion can be reused for generation.

### [Description of Operation in Second Embodiment]

In the second embodiment, there is performed the same generation as that in the first embodiment using the upward movement of the float 3 when the water level rises with water supply into the water tank 1 and the downward movement of the float 3 when the water level is lowered with drainage, torque is taken out by utilizing the upward and downward movements of the water tank 1 involved by an increase/decrease of mass of the entire water tank 1 in which an amount of water is increased or decreased, and the taken torque is used. This operation will now be described hereinafter in detail.

When the mass of the entire water tank 1 including water stored inside increases at the time of supplying water into the water tank 1, the water tank 1 moves down by the water tank vertically moving means 110. When the water tank 1 moves down, since the female screw body 122 of the linear-rotation converting means 120 moves down together with the water tank 1, the male screw shaft 121 meshing with the female screw body 122 rotates in the counterclockwise direction. With this rotation, the first gear 132 is driven and rotated in the same direction, and the second gear 133 meshing with the first gear 132 is driven and rotated in the clockwise direction.

On the other hand, the drive shaft 134a is pushed downward in FIG. 7 by the air pump 134b and the hydraulic pump 134c. Therefore, the output bevel gear 134g of the direction switching portion 134 meshes with the bevel gear 134e provided on the upper side in the drawing. Since the second gear 133 rotates in the clockwise direction as described above when the water tank 1 moves down, the input shaft 135a of the speed increaser 135 rotates in the clockwise direction and accelerates through the drive shaft 134a, the bevel gear 134e, and the output bevel gear 134g based on this rotation, and the drawing pump 136 is operated by an output from the speed increaser 135.

Then, when the water tank 1 starts drainage, the water tank 1 moves up by the water tank vertical moving means 110 as the mass of the entire water tank 1 is reduced. When the water tank 1 moves up, since the female screw body 122 of the linear-rotation converting means 120 moves up together with the water tank 1, the male screw shaft 121 meshing with the female screw body 122 rotates in the clockwise direction. With this rotation, the first gear 132 rotates in the clockwise direction, the second gear 133 meshing with the first gear 132 is driven to rotate in the counterclockwise direction.

On the other hand, since impetuses of the air pump 134b and the hydraulic pump 134c are eliminated by the upward movement of the water tank 1, the drive shaft 134a is pushed upward in FIG. 7 by elastic force of the coil spring 134d. Therefore, the output bevel gear 134g of the direction switching portion 134 meshes with the bevel gear 134f provided on the lower side in the drawing. Therefore, when the second gear 133 rotates in the counterclockwise direction as described above, the output bevel gear 134g rotates in the clockwise direction like the situation where the water tank 1 moves down, and the speed increaser 135 increases a speed of this rotation, thereby driving the drawing pump 136. In short, the drawing pump 136 operates both when the water tank 1 moves down and when the same moves up.

### [Third Embodiment of Hydraulic Generating Apparatus]

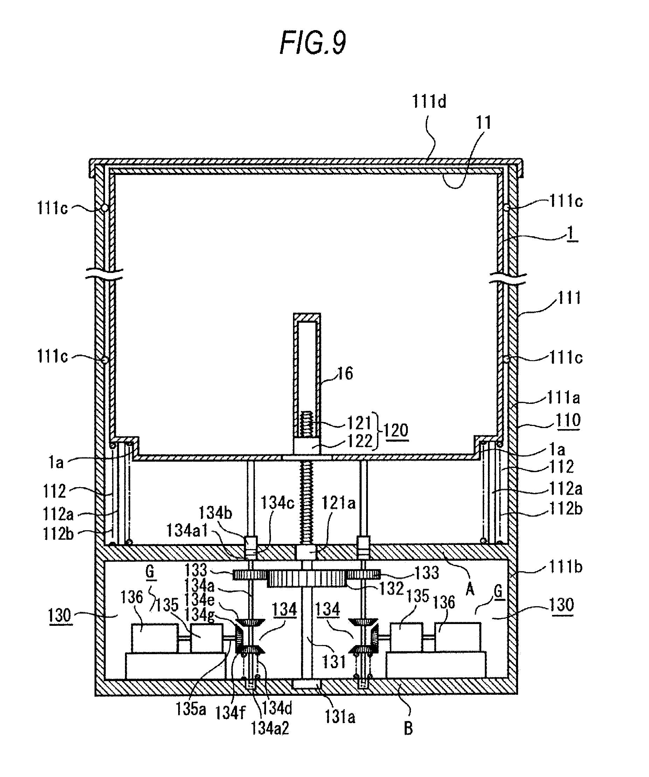

A third embodiment of a hydraulic generating apparatus according to the present invention will now be described with reference to FIG. 9. It is to be noted that like reference numerals denote parts equal to those in the second embodiment of the hydraulic generating apparatus depicted in FIG. 7 and FIG. 8, and a description thereof will be omitted.

This embodiment provides a configuration that takes out torque obtained from upward and downward movements of a water tank 1 alone and generates electricity. Further, vertically moving means 110 and linear-rotation converting means 120 equal to those in the second embodiment are provided, and a water tank 1 having a simplified structure and torque using means 130 constituted of a generator G are also provided.

The water tank 1 comprises non-illustrated water supplying/draining means 2' and also comprises a bottomed hollow cylindrical body 16 raised from the center of an inner surface of a bottom portion thereof. The water supplying/draining means 2 has the same configuration as that shown in FIG. 8. A hollow portion formed in the bottomed hollow cylindrical body 16 faces the outside through the bottom surface of the water tank 1 while maintaining a watertight relationship. It is to be noted that, to maintain the watertight relationship, a female screw body 121 of later-described linear-rotation converting means 120 is allowed to be interposed. Moreover, since a configuration of the water tank 1 is simplified as described above, a depth dimension can be reduced as compared with the first embodiment as desired.

The water tank vertically moving means 110 has the same configuration as that in the second embodiment. Additionally, a configuration of the torque using means 130 except a point that a drawing pump 136 is substituted by a generator 136 is the same as that in the second embodiment. It is to be noted that reference numeral 111d denotes an upper lid that covers an open end portion of a water tank guide portion 111a.

### [Fourth Embodiment of Hydraulic Generating Apparatus]

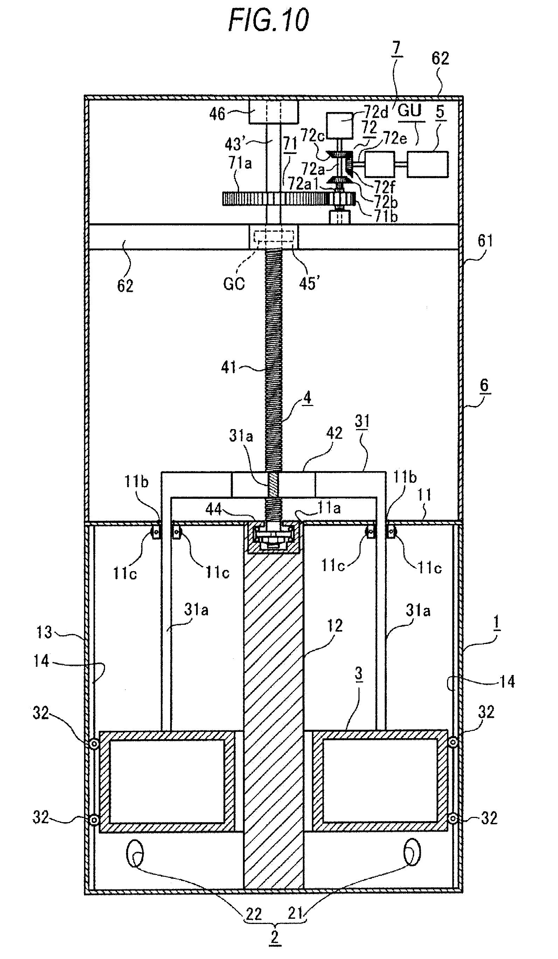

A fourth embodiment of a hydraulic generating apparatus according to the present invention will now be described with reference to FIG. 10.

In addition to the configuration of the first embodiment, this embodiment comprises generation controlling means GC for performing control to suspend the generation in predetermined sections of moving-up and moving-down operations of a float 3. In the first embodiment shown in FIG. 1, electricity can be generated in all sections of the moving-up and moving-down operations of the float 3. However, even if electricity is not generated in not only all sections but also some of sections corresponding to the moving-up and moving-down operations of the float 3, it is obvious from the above description that the principle of the present invention is not changed at all. Therefore, in this embodiment, although the generation controlling means GC performs control to suspend the generation in desired part of sections, e.g., a section of the moving-up operation of the float 3 or a section of the moving-down operation of the float 3, a configuration for generating electricity in remaining sections is adopted.

### [Generation Controlling Means GC]

As the generation controlling means GC, means for performing control to suspend the generation in predetermined sections of the moving-up and moving-down operations of the float 3 can suffice, and a specific configuration that achieves this means is not restricted in particular. To facilitate understanding of the present invention, a specific configuration of the generation controlling means GC can be exemplified as follows, and it can be understood that various configurations can be adopted as obvious from this exemplification.
(1) In the predetermined sections, the linear-rotation conversion mechanism 4 is disabled so that the float 3 can freely move up or down. That is, when the linear-rotation conversion mechanism 4 is disabled, the linear-rotation conversion mechanism 4 does not generate torque even though the float 3 moves up or down, and hence the generator 5 is not driven.
(2) In the predetermined sections, torque transmission between the linear-rotation conversion mechanism 4 and the generator 5 is stopped. That is, although the linear-rotation conversion mechanism 4 generates torque when the float 3 moves up or down, this torque does not reach the generator 5, and hence the generator 5 is not driven. A later-described illustrated embodiment is an example of this configuration.
(3) In the predetermined sections, the generator 5 is configured to perform a no-load operation. That is, the generator 5 is opened from a load circuit. As a result, the hydraulic generating apparatus does not generate electricity as seen from the load circuit.

In the embodiment shown in FIG. 10, the generation controlling means GC separates a male screw shaft 41 of the linear-rotation conversion mechanism 4 from a gear shaft 43, and a bearing above the male screw shaft 41 and the generation controlling means GC are included in a member that is interposed between the male screw shaft 41 and the gear shaft 43 and denoted by reference numeral 45. Additionally, the generation controlling means GC is constituted of an electromagnetic clutch, and it enables switching coupling/separation of the male screw shaft 41 and the gear shaft 43. That is, the male screw shaft 41 and the gear shaft 43 are coupled with each other when the electromagnetic clutch is energized, and these members are separated from each other when the electromagnetic clutch is disenergized. When the generation controlling means GC is controlled and the male screw shaft 41 and the gear shaft 43 are coupled with each other, the torque of the male screw shaft 41 is transmitted to the gear shaft 43. On the other hand, when the generation controlling means GC is controlled and the male screw shaft 41 and the gear shaft 43 are separated from each other, the torque of the male screw shaft 41 is not transmitted to the gear shaft 43.

Therefore, in the desired sections at the time of upward movement and downward movement of the float 3, when the electromagnetic clutch of the generation controlling means GC is disenergized, electricity is not generated even though the male screw shaft 41 rotates. It is to be noted that, to operate the generation control means GC in tandem with the movement of the float 3, for example, a moving direction and a position of the float 3 can be detected by non-illustrated detecting means such as a sensor, and the generation controlling means GC can be operated as described above when it is determined that the moving direction and the position of the float 3 have reached the predetermined section, thereby preventing generation.

A description will now be given as to any other configuration and effects of the hydraulic generating apparatus in a first mode where the predetermined section corresponds to the upward movement of the float 3 and a second mode where the predetermined section corresponds to the downward movement of the float 3.

### [Configuration and Effects in First Mode]

The water supplying/draining means 2 can accelerate raising a water level in the water tank 1 by increasing (raising) an amount of water supply (a water supply speed) per unit time with respect to the inside of the water tank 1. When the water supply speed is increased, movement of water in the water tank 1 is apt to become turbulent, and the float 3 is easily affected when the float 3 is relatively small and has a small wetted area. As a result, the float 3 may welter when moving up, the linear-rotation conversion mechanism 4 may not perform the smooth converting operation, or durability of the linear-rotation conversion mechanism 4 may be deteriorated. It is to be noted that, when the float 3 is big, its mass is large, and hence the float 3 is hardly affected even though water in the water tank 1 moves irregularly.

On the other hand, in the first mode, since a load produced due to generation does not act on the linear-rotation conversion mechanism 4 when the float 3 moves up, the float 3 is free, and hence the above-described inconvenience hardly occurs.

Since the torque used for generation is produced by the mass of the float 3 when the float 3 moves down, even if the float 3 is relatively small, it is preferable to set a relatively large mass in order to obtain large torque. It is to be noted that the mass of the float 3 can be set large as long as the float 3 can float on water.

According to the first mode, even if movement of water becomes turbulent with water supply when the float 3 moves up, no electricity is generated in this section, an influence on the float 3, the linear-rotation conversion mechanism 4, and the generator 5 practically hardly results in a problem, and hence the float 3 and the water tank 1 can be miniaturized, thereby providing the compact hydraulic generating apparatus for low electric power.

### [Configuration and Effects in Second Mode]

In the second mode, torque used for generation is generated through the float 3 floating on a water surface when a water level in the water tank 1 rises, and no electricity is generated at the time of lowering. Therefore, in order to obtain large torque in generation, there will be no problem if the mass of the float 3 hardly affects and buoyancy of water acting on the float 3 is large. Therefore, the float 3 may have a light weight, and the high buoyancy of water can be converted into torque at the time of rise of the water level if a large wetted area of the float 3 is set. It is to be noted that the mass of the float 3 that enables downward movement of the float 3 by its own weight can suffice.

According to the second mode, since the mass of the float 3 can be reduced, the hydraulic generating apparatus which has a light weight and can be readily moved can be provided.

### [Fifth Embodiment of Hydraulic Generating Apparatus]

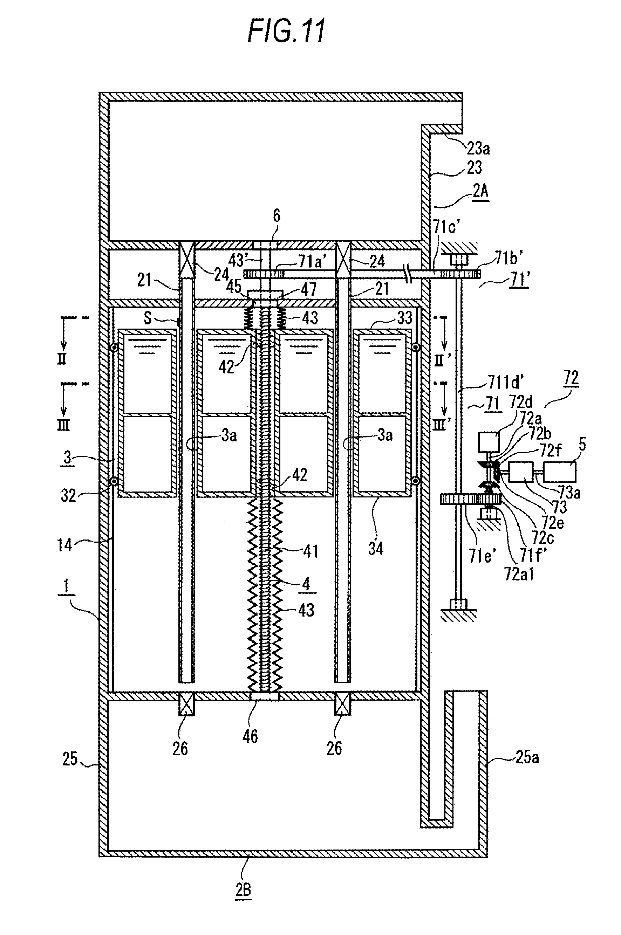

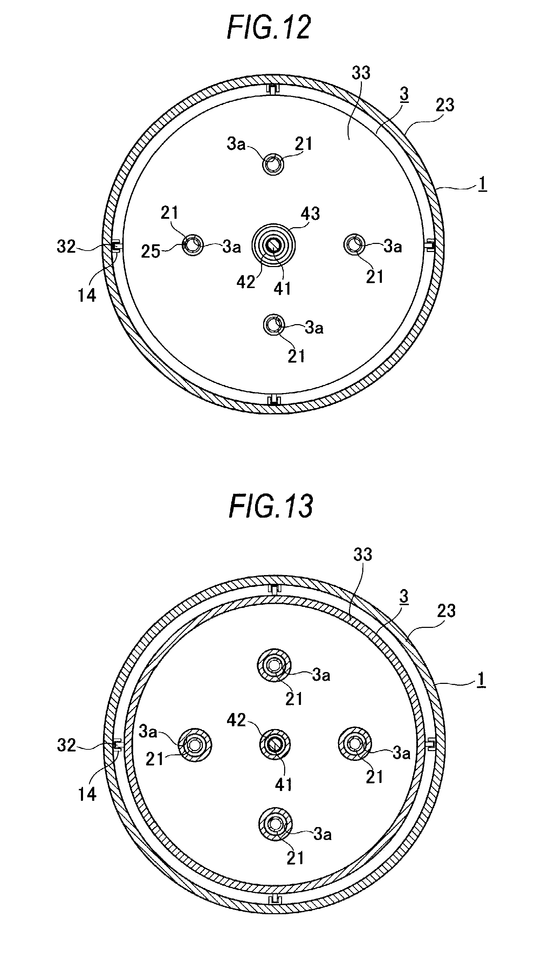

A fifth embodiment of a hydraulic generating apparatus will now be described with reference to FIG. 11 to FIG. 13. It is to be noted that like reference numerals denote parts equal to those in FIG. 1, and a description thereof will be omitted. This embodiment is configured in such a manner that a mass required for generation when a float 3 moves down is obtained by a liquid and buoyancy required for generation when the float 3 moves up is obtained by a gas. Further, even if a transverse cross-sectional area of a water tank 1 is not very larger than that of the float 3, water can be supplied into the water tank 1 from the upper side of the float 3 without being obstructed by the float 3, and water supplying means 2A taking reduction in turbulence of water at the time of water supply into consideration and draining means 2B taking pumping up water into consideration are provided. Furthermore, a configuration of a torque transmitting portion 7 of a generator 5 is simplified.

### [Float 3]

First and second envelopes 33 and 34 of the float 3 are integrally coupled with each other. The first envelope 33 has a volume that enables containing an amount of a liquid, e.g., water with which a mass of the entire float 3 can have a desired value required for generation when the float 3 moves down. In other words, the mass of the float 3 is determined based on water that is poured inside with a significant percentage. The second envelope 32 has a volume that enables including an amount of a gas, e.g., air with which buoyancy of the float 3 can have a desired value required for generation when the float 3 moves up. Therefore, equalizing an electric-generating capacity at the time of downward movement of the float 3 and that at the time of upward movement of the float 3 can be easily realized at low cost. It is to be noted that, when an opening/closing tap is arranged on the first envelope 33, water stored inside can be discharged at the time of manufacture, storage, and conveyance. Therefore, a weight of the hydraulic generating apparatus can be reduced, and the convenience of transportation can be served. Further, when an opening/closing tap is likewise arranged on the second envelope 34, the buoyancy of the float 3 can be adjusted by, e.g., putting a small amount of water inside.

Furthermore, as shown in FIG. 11, although it is preferable for the float 3 that the first and second envelopes 33 and 34 are directly coupled with each other and the second envelope 34 is placed below the first envelope 33 to be integrally coupled, these envelopes may be integrally coupled to interpose an appropriate intermediate member therebetween as desired. In the illustrated embodiment, the first and second envelopes 33 and 34 of the float 3 have the same outer shapes. Moreover, since the water tank 1 has a cylindrical shape, the float 3 has a discoid outer shape, and hence an appropriate gap is present between these envelopes.

Additionally, the float 3 can be formed by using an appropriate material. For example, it is possible to use FRP (reinforced plastics), a metal, a ceramic material, a wood, and others. However, to enhance a generation efficiency, the float 3 preferably has a light weight, and hence using FRP, a light metal, and SUS (stainless steel) as main materials to form the float 3 with a small wall thickness within an allowance is preferable. It is to be noted that, as a reinforcement fiber used for FRP, it is possible to adopt an inorganic fiber such as glass, carbon, a metal oxide, and others. Moreover, as the light metal, it is possible to use aluminum (Al), titanium (Ti), magnesium (Ma), or an alloy containing one or more of these materials as components.

Additionally, an appropriate number of through holes 3a which are blocked off from the inside in a liquid-tight manner and pierce in the vertical direction are formed in the float 3. In the illustrated embodiment, four through holes 3a are formed at intervals of 90° along the circumference with a linear-rotation conversion mechanism 4 at the center. Further, water supply pipes 21 are inserted into these through holes 3a so as to be freely relatively movable.

### [Water Supplying Means 2a]

Water supplying means 2A comprises the water supply pipes 21, an upper tank 23, electromagnetic valves 24, and a water level sensor S. The upper tank 23 is arranged above the water tank 1 integrally with the water tank 1, and it previously stores water prior to water supply to the water tank 1 from a non-illustrated external water source through an inflow pipe 23a. The water supply pipes 21 are extended downward from a bottom portion of the upper tank 23 through the electromagnetic valves 24, and they are inserted into the water tank 1. Further, an end of each water supply pipe 21 is placed at a position close to the bottom portion of the water tank 1. Therefore, an unmanageable behavior of water at the time of water supply can be suppressed. The water level sensor S is arranged to control a water level in the water tank 1 and introduce a predetermined amount of water to the inside, and it is attached to, e.g., an outer surface of water supply pipe 21.

Further, taking of introducing water into the upper tank 23 can be uninterruptedly continued even during each step of introduction of water into the water tank 1, generation, or drainage. Therefore, a supply amount of the introducing water into the upper tank 31 per unit time can be small.

### [Draining Means 2B]

The draining means 2B comprises a lower tank 25 and electromagnetic valves 26. The lower tank 25 is means for temporarily storing water discharged from the water tank 1, and water is discharged to the outside or pumped up by a non-illustrated pump to facilitate reuse. It is to be noted that reference numeral 25a denotes a drain pipe. The electromagnetic valve 26 is turned on (opened) when draining the water tank 1, and it is turned off (closed) when supplying water.

### [Linear-rotation Converting Means 4]

The linear-rotation converting means 4 is arranged in the water tank 1, a lower end of a male screw shaft 41 thereof is preferably fixed at the center of gravity on a bottom portion of the water tank 1 by a bearing 44, and an upper end of the same is fixed on an upper lid 11 of the water tank 1 by a bearing 45. Furthermore, a pulley shaft 43' integrally extending from the upper end of the male screw shaft 41 to the upper side is rotatably supported on an outer surface of a bottom portion of the upper tank 23 by a bearing 46. A lower portion of the pulley shaft 43' is configured in such a manner that rotation thereof can be suppressed by an electromagnetic brake 47. A pair of female screw bodies 42 are separately fixed to the upper portion and the lower portion of the float 3. Moreover, water blocking means 43 is arranged so that the linear-rotation converting means 4 can be blocked from water.

A pair of water blocking means 43 are used, and one of them surrounds the male screw shaft 41 so as to be watertight with respect to the outside between the upper female screw body 42 and the bearing 45. Additionally, the other surrounds the male screw shaft 41 in the watertight manner between the lower female screw body 42 and the bearing 46. In the illustrated embodiment, although a bellows is used as the water blocking means 43, the present invention is not restricted thereto, and any other movable waterproof means, e.g., a watertight telescopic mechanism can be used.

### [Torque Transmitting Portion 7]

The torque transmitting portion 7 is constituted of a torque takeout portion 71, a rotational direction switching portion 72, and a speed increaser 73.

### (Torque Takeout Portion 71)

The torque takeout portion 71 is constituted of the pulley shaft 43', first and second pulleys 71a' and 71b', a timing belt 71c', a rotary shaft 71d', and gears 71e' and 71f'. The first pulley 71a' is attached to the pulley shaft 43'. The second pulley 71b' is attached to the rotary shaft 71d' that is apart from the pulley shaft 43' and interlocks with a first pulley 711a through a timing belt 711d. The gears 71e' and 71f' are attached to the rotary shaft 71d'.

### (Rotational Direction Switching Portion 72 and Speed Increaser 73)

The rotational direction switching portion 72 and the speed increaser 73 have the same configurations as those in the first embodiment.

According to the fifth embodiment described above, a volume of the second envelope 34 of the float 3 is enlarged to increase the buoyancy at the time of upward movement of the float 3, a volume of the first envelope 33 is likewise enlarged, and the mass of the float 3 can be increased as desired by pouring a liquid such as water to the inside, and hence substantially the same generation can be carried out at both the upward movement and the downward movement of the float 3. Additionally, since a liquid such as water is used for setting the mass of the float 3, a cost can be reduced, facilitation can be realized, and the liquid in the float 3 can be discharged when it is not necessary, e.g., at the time of transportation, thus achieving a light weight. It is to be noted that, when water is discharged so that a water level can be lowered faster than the float 3 at the time of drainage from the water tank 1, a desired mass can act on the linear-rotation conversion mechanism 4 even though a liquid is put into the envelope 31.

### [Sixth Embodiment of Hydraulic Generating Apparatus]

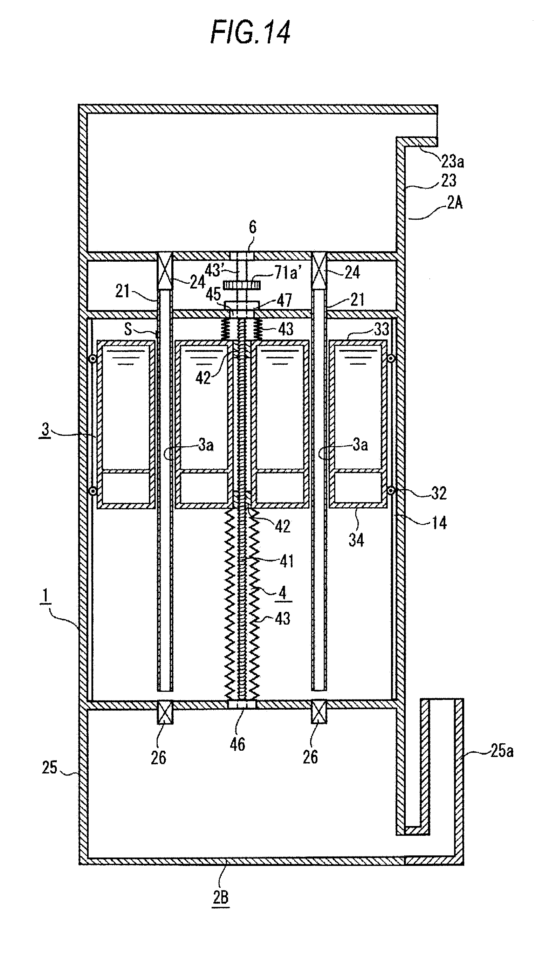

A sixth embodiment of a hydraulic generating apparatus will now be described with reference to FIG. 14. It is to be noted that like reference numerals denote parts equal to those in FIG. 11 to omit a description thereof. In this embodiment, a volume of a second envelope 34 of a float 3 is smaller than that in the fifth embodiment. A degree of reduction in volume is set in such a manner that substantial generation cannot be carried out even though the float 3 floats on a water surface in a water tank 1 and moves up with rise of the water surface.

Therefore, this embodiment is preferable for a conformation that generation is carried out only when the float 3 moves down.

According to the sixth embodiment, since the second envelope 34 of the float 3 has a small volume, the entire float 3 can be reduced in size. As a result, the hydraulic generating apparatus can be miniaturized and provided at low cost. Further, when a size of the float is maintained constant, since the volume of the first envelope 33 of the float 3 can be relatively increased, a generation capacity when the float 3 moves down can be increased. Furthermore, in addition to an electromagnetic brake 47, a non-illustrated electromagnetic clutch is interposed between a male screw shaft 41 and a pulley shaft 43', or the above-described functional elements are added to the electromagnetic brake 47, whereby the linear-rotation conversion mechanism 4 can be freed during the upward movement of the float 3 and the upward movement of the float 3 can be smoothly and rapidly carried out.

### [Seventh Embodiment of Hydraulic Generating Apparatus]

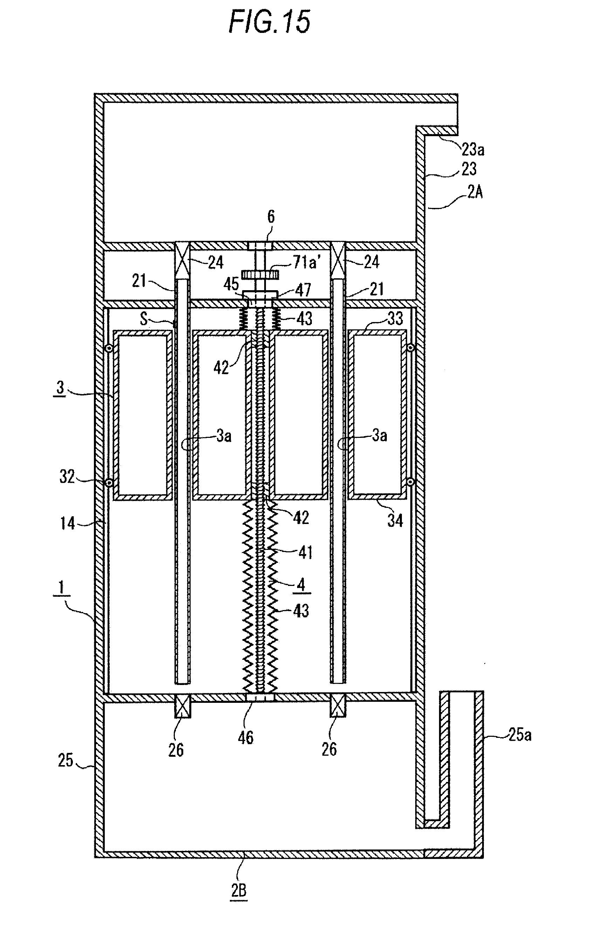

A seventh embodiment of a hydraulic generating apparatus will now be described with reference to FIG. 15. It is to be noted that like reference numerals denote parts equal to those in FIG. 11 to omit a description thereof. This embodiment is configured in such a manner that a float 3 has a small wall thickness and it is used while having a hollow inner portion.

Since this embodiment has the above-described configuration, buoyancy of the float 3 can be extremely increased, and hence large torque can be given to a linear-rotation conversion mechanism 4 when the float 3 moves up together with a water level.

On the other hand, when the float 3 moves down together with the water level, since the float 3 has a small mass, torque which is required for generation is not produced even if the linear-rotation conversion mechanism 4 rotates. It is to be noted that, when such an electromagnetic clutch as that described in the sixth embodiment is provided and the electromagnetic clutch is released to free the linear-rotation conversion mechanism 4 when the float 3 moves down, lowering of the float 3 can be smoothly and rapidly carried out.

### [First Embodiment of Hydraulic Generating System]

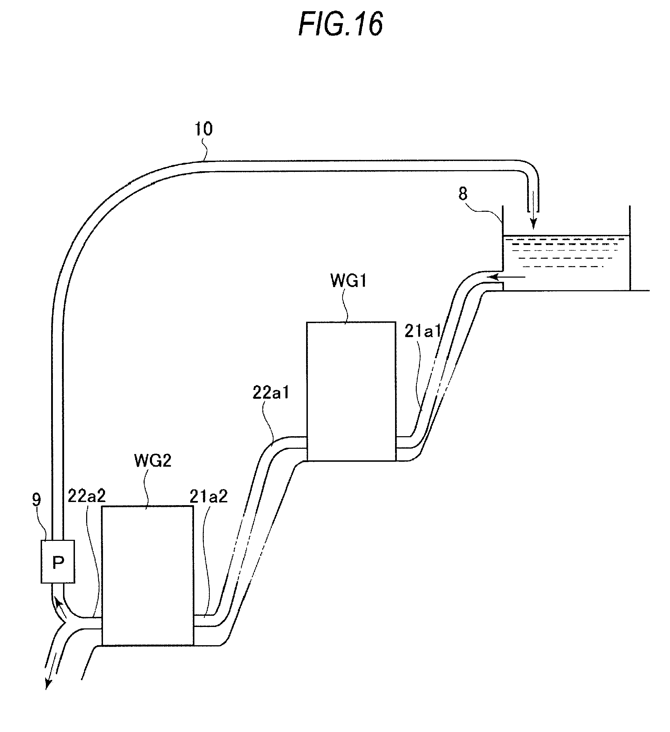

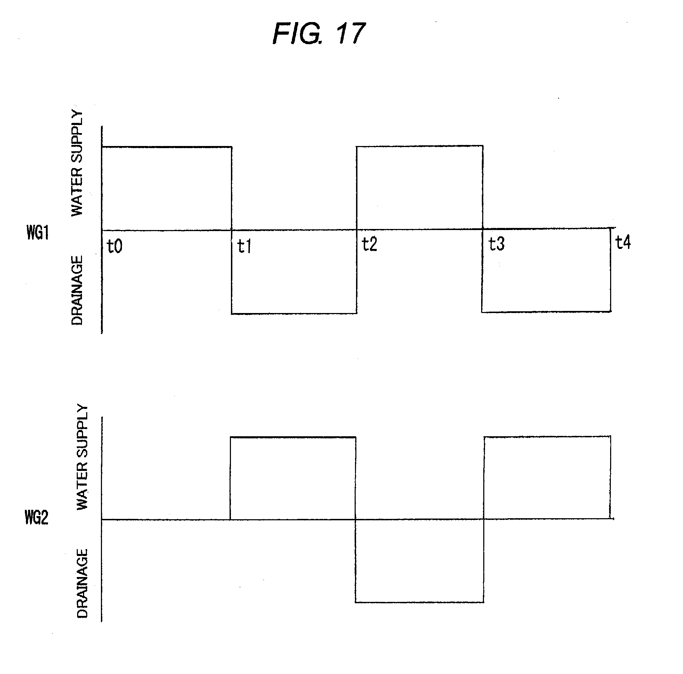

A first embodiment of a hydraulic generating system will now be described with reference to FIG. 16 and FIG. 17. In this embodiment, water paths of a pair of first hydraulic generating apparatuses WG1 and WG2 described with reference to FIG. 1 to FIG. 6 are cascade-connected, whereby a basic configuration of the hydraulic generating system is configured. It is to be noted that the plurality of basic arrangements may be connected in parallel and/or series.

That is, in FIG. 10, an amount of water used for generation in a water collecting portion 8 placed on the upstream side is assured, the first hydraulic generating apparatus WG1 is arranged at a position where a necessary head (or a hydraulic pressure) can be obtained from a water collecting portion 8, and its water supply pipe 21a1 is connected to the water collecting portion 8 trough a water path. Furthermore, the second hydraulic generating apparatus WG2 is arranged at a position where a necessary head (or a hydraulic pressure) is obtained from the drain pipe 22a1 of the first hydraulic generating apparatus WG1, and this water supply pipe 21a2 is connected to the water path through a drain pipe 22a1 of the first hydraulic generating apparatus WG1. Moreover, at least a part of discharged water flowing out from the water distributing pipe 22a2 of the second hydraulic generating apparatus WG2 is pumped to the water collecting portion 8 via the pump 9 and the water pumping tube 10.

An operation of the hydraulic generating system will now be described with reference to FIG. 16, FIG. 17, and FIG. 1.

Supply of water supplied from the water collecting portion 8 in FIG. 16 into the water tank 1 from the water supply pipe 21a1 of the first hydraulic generating apparatus WG1 starts at a time t0 in FIG. 17. As a result, a water level in the water tank 1 rises in FIG. 1, the float 3 starts upward movement, and generation is carried out until a time t1 is reached.

When the time t1 is reached, the water supply is stopped, and drainage is subsequently started. As a result, since the float 3 starts downward movement, generation in drainage is carried out until a time t2 is reached. Further, at the same time, water discharged from the first hydraulic generating apparatus WG1 is supplied into the water tank 1 from the water supply pipe 22a2 of the second hydraulic generating apparatus WG2 through the water path, and generation at the time of water supply based on the upward movement of the float 3 is performed in the second hydraulic generating apparatus WG2 until the time t2 is reached.

When the time t2 is reached, in the first hydraulic generating apparatus WG1, since water is again supplied into the water tank 1 from the water collecting portion 8 in FIG. 16, generation at the time of water supply is performed until a time t3 in FIG. 17 is reached. At the same time, water supply is stopped in the second hydraulic generating apparatus WG2, then the operation is switched to drainage, and hence generation at the time of drainage is carried out until the time t3 is reached.

Moreover, a part of water discharged from the second hydraulic generating apparatus WG2 is pumped up by the pump 9 and the water pumping tube 10 and supplied to the water collecting portion 8. As described above, in this embodiment, since a part of the water used for generation is circulated and reused, an amount of water consumed for generation can be reduced. Therefore, when a highly efficient pump is used as the pump 9, a decrease in generated electricity can be reduced as much as possible, and an amount of electricity that can be taken out from the hydraulic generating system can be increased.

As can be understood from the above description, the first hydraulic generating apparatus WG1 and the second hydraulic generating apparatus WG2 operate with the shifted timings of water supply and drainage, whereby water discharged from the first hydraulic generating apparatus WG1 can be immediately used as water supplied to the second hydraulic generating apparatus WG2.

In this embodiment, at least a part of water discharged from the second hydraulic generating apparatus WG2 is pumped up to the water collecting portion 8 by the pump 9, and this water is circulated and used for generation. Therefore, an amount of water used for hydraulic generation can be reduced. It is to be noted that, as electric power for driving the pump 9, electric power generated by the second hydraulic generating apparatus WG2 can be used. However, electric power obtained from a different system can be used as desired.

Additionally, according to this hydraulic generating system, the upstream side of a river or a water tower in, e.g., a water delivery system may be used as the water collecting portion 8, and the hydraulic generating apparatuses WG1 and WG2 may be installed with respect to water pipes connected to the downstream side of the river or the water tower. It is to be noted that, in case of the water delivery system, if there is a hydraulic pressure corresponding to a necessary head of water, the hydraulic generating system according to the present invention normally operates even though there is no actual head of water, and hence particular problems do not occur.

### [Second Embodiment of Hydraulic Generating System]

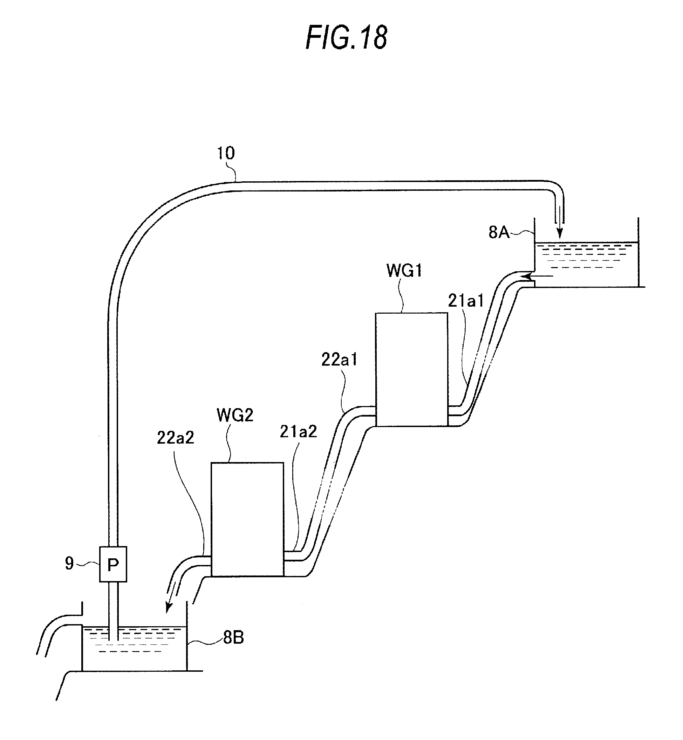

A second embodiment of the hydraulic generating system will now be described with reference to FIG. 18. It is to be noted that like reference numerals denote parts equal to those in FIG. 16, and a description thereof will be omitted. This embodiment is different from the first embodiment in that water discharged from a second hydraulic generating apparatus WG2 is temporarily collected in a second water collecting portion 8B and the discharged water stored in this water collecting portion 8B is pumped up to a first water collecting portion 8A placed at a position having a high head of water by a pump 9.

According to this embodiment, since the water can be pumped up even in a time zone that is not a drain step of the second hydraulic generating apparatus WG2, even a pump P having a relatively small volume can pump up a desired amount of water. Further, when the pump device P included in the hydraulic generating apparatus according to the second embodiment is used to pump up water, electric power does not have to be used for pumping up water. Furthermore, the hydraulic generating apparatus according to the second embodiment may comprise a generator in place of the pump device P as desired, and a pump for pumping up water can be arranged at the water collecting portion or in the vicinity thereof, and electric power generated by the generator can be used for driving the pump device P. As a result, piping for the pump device P can be simplified, or a degree of freedom with respect to an arrangement position of the pump can be improved.

### [Third Embodiment of Hydraulic Generating System]

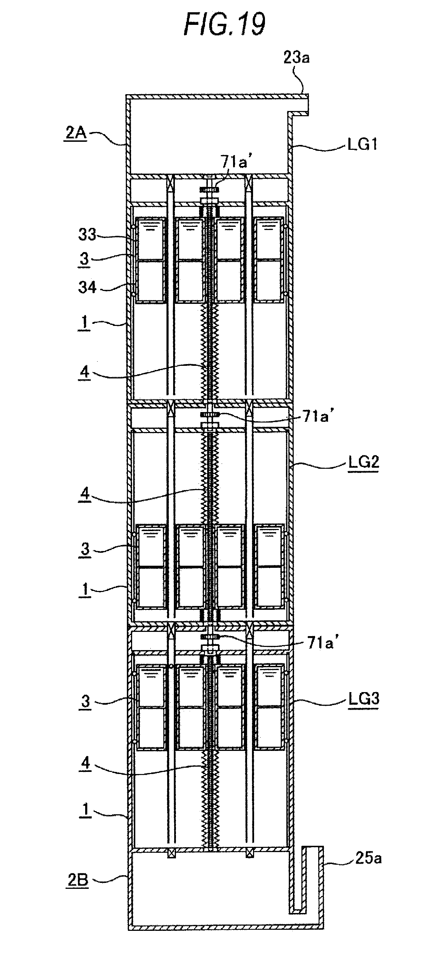

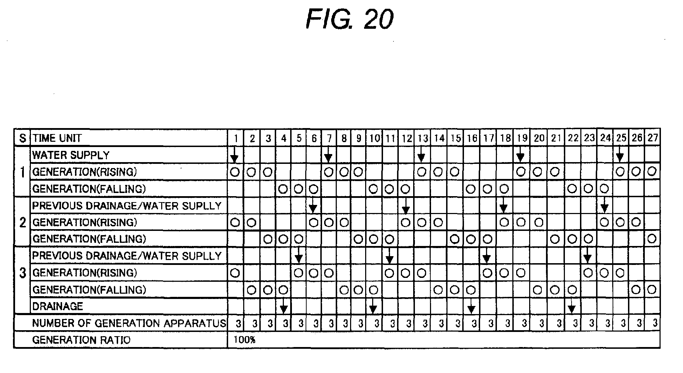

A third embodiment of the hydraulic generating system will now be described with reference to FIG. 19 and FIG. 20. Giving an outline explanation, according to this embodiment, a plurality of, which is three as shown in the drawing, hydraulic generating apparatuses according to the fifth embodiment described with reference to FIG. 11 are directly coupled with each other in such a manner that their primary portions are used to serially flow water, and the plurality of hydraulic generating apparatuses constitute a compact hydraulic generating system that economically operates.

That is, in FIG. 19, reference character LG1 denotes a hydraulic generating apparatus on a first stage; reference character LG2, a counterpart on a second stage; and reference character LG3, a counterpart on a third stage, respectively.

As can be understood from comparison with FIG. 11, in the hydraulic generating apparatus LG1 on the first stage, a lower tank 25 has been removed. In the hydraulic generating apparatus LG2, both an upper tank 23 and the lower tank 25 have been removed. In the liquid generating apparatus LG3, the upper tank 23 has been removed.

In the hydraulic generating apparatus LG1 on the first stage, water from the upper tank 23 is first introduced into a water tank 1, and generation is started in the first place. Furthermore, a bottom portion of the water tank 1 of the hydraulic generating apparatus LG1 on the first stage is directly connected to a bottom plate portion of the upper tank 23 of the hydraulic generating apparatus LG2 on the second stage. Therefore, electromagnetic valves 26 on the bottom portion of the water tank 1 in the hydraulic generating apparatus LG1 on the first stage have been removed, electromagnetic valves 24 in the hydraulic generating apparatus LG2 on the second stage also function as the electromagnetic valves 26. Therefore, in the hydraulic generating apparatus LG1 on the first stage, when drainage of the water tank 1 is performed, this drainage can immediately serve as water supply to the water tank 1 in the hydraulic generating apparatus LG2 on the second stage. As a result, introduction of water into the water tank 1 is accelerated, and hence a pause time of generation that is produced at the time of introduction can be shortened.

Since water after generation in the hydraulic generating apparatus LG1 on the first stage is continuously introduced into the hydraulic generating apparatus LG2 on the second stage, and the hydraulic generating apparatus LG2 on the second stage performs generation in the second place. Moreover, in the same configuration as joining with respect to the hydraulic generating apparatus LG2 on the second stage in the hydraulic generating apparatus LG1 on the first stage, electromagnetic valves 24 of the hydraulic generating apparatus LG3 on the third stage also function as the electromagnetic valves 26 of the hydraulic generating apparatus LG2 on the second stage. Therefore, its operations and effects are the same as those described above.

Since water after generation in the hydraulic generating apparatus LG2 on the second stage is continuously introduced into the hydraulic generating apparatus LG3 on the third stage, the hydraulic generating apparatus LG3 carries out generation in the last place. Further, for the same reason as that described above, since water discharged from the hydraulic generating apparatus LG2 on the second stage is immediately introduced into the water tank 1 of the hydraulic generating apparatus LG3 on the third stage, the same operations and effects as those described above are exercised. When generation performed at the time of upward movement following downward movement of the water tank 1 is finished, the electromagnetic valves 26 are turned on (opened), water is discharged into the lower tank 25, and hence the water is discharged to the outside.

The timing of an operation of the hydraulic generating system in the third embodiment will now be described with reference to a timing charge depicted in FIG. 20. In this example, although a water supply time with respect to the water tank 1 is set to 1/3 of each of a falling time and a rising time for the sake of explanation, the water supply time can be actually further reduced by increasing an amount of water supply per unit time.

It is to be noted that, in FIG. 20, "S" in a first row represents the number of stages in the three liquid generating apparatuses, and unit times 1 to 27 all having the same period in the same represents the order of timer course. "S" in a first column represents the stage of the liquid generating apparatus, and each of figures 1 to 3 represents the number of stages. In a second column, "water supply" represents a water introducing step with respect to the enabled water tank 1; "generation (rising)", a step of performing generation when the water tank 1 having water supplied thereto moves up; "generation (falling)", a step of performing generation when the water tank 1 from which water has been discharged moves down; "previous drainage/water supply", a step of simultaneously performing drainage of the water tank 1 on the previous stage and water supply on the current stage; and "drainage", drainage on the last stage (the third stage) with respect to the lower tank 25. "Number of apparatuses generating electricity" represents the number of apparatuses performing generation in three apparatuses per unit time, and "generation ratio (%)" represents % of a generation time in each of the unit times 1 to 27. "Arrow" written in a section placed at each intersection of the column of each of the time units 1 to 27 and the row of water supply/drainage represents a step of water supply/drainage, and "circle" represents a step of generation, respectively. Therefore, if three circles are continuously provided at the generation step, this means that generation is performed for a time which is triple the unit time.

As can be understood from FIG. 20, at each step from start of water supply to end of drainage, the three hydraulic generating apparatuses LG1, LG2, and LG3 always perform the generating operation at the same time, continuous electric power can be obtained. Further, although a generation output is apt to be instantaneously reduced or instantaneously interrupted when the float 3 changes from rising to falling, the hydraulic generating apparatus on a given stage stably generates electricity at the time of this change and the hydraulic generating apparatuses on the other stages stably generate electricity during rising or falling, and hence an influence on the entire generation is small.

As described above, the third embodiment of the hydraulic generating system has the configuration that the above-described operation is repeatedly performed and the hydraulic generating apparatuses LG on the plurality of stages are directly coupled in series, and hence it has an advantage that a necessary head of water required for this operation can be considerably small. Furthermore, this embodiment is characterized in convenience that a special head does not have to be given when supplying water to the hydraulic generating apparatus LG1 on the first stage. Moreover, since continuous generation is performed on multiple stages with a single water supply operation, this embodiment has an excellent advantage that high generation efficiency and stable generated electricity can be obtained.

## Claims

1. A hydraulic power generating apparatus, wherein the power generating apparatus comprises:
a water tank (1) which enables water supply and drainage;
a float (3) which is arranged to float (3)in the water tank (1) and moves up or moves down in accordance with a fluctuation in water surface involved by the water supply to the water tank (1)or the drainage;
a first linear-rotation conversion mechanism (4);
a generator (5) which is driven by the rotation of the linear-rotation conversion mechanism (4) and generates electricity;
wherein the first linear-rotation conversion mechanism (4) comprises a male screw shaft (41) and female screw body (42) screwed together with the male screw shaft (41) and which is arranged in such a manner that the male screw shaft (41) is rotatably supported, the female screw body (42) interlocks with linear movement when the float (3) moves up or moves down, and the male screw shaft (41) is rotated by a linear movement of the female screw body (42) at the time of interlocking;
the generator (5) is driven by the rotation of the male screw shaft (41).

2. The hydraulic power generating apparatus according to claim 1,
wherein the float (3) comprises interlocking means (31) which extends to the outside of the water tank (1); and
the first linear-rotation conversion mechanism (4) is arranged outside the water tank (1), and the female screw body (41) is arranged in the interlocking means (31) of the float (3).

3. The hydraulic power generating apparatus according to claim 1 or 2,
wherein the float (3) does not rotate with respect to the water tank (1); and
the first linear-rotation conversion mechanism (41) is arranged near the center of gravity of the float (3).

4. The hydraulic power generating apparatus according to any one of claims 1 to 3, comprising:
water tank vertically moving means (110) for moving up and down the water tank (1) in accordance with a change in mass of the water tank (1) involved by the water supply to the water tank and the drainage;
second linear-rotation converting means (120) for converting upward and downward movements of the water tank (1) into rotational movement and taking out torque; and
torque using means (130) for operating with the torque converted into the rotational movement by the second linear-rotation converting means (120).

5. The hydraulic power generating apparatus according to any one of claims 1 to 4, comprising generation controlling means (GC) for performing control to suspend the generation in predetermined sections of the upward movement and the downward movement of the float (3).

6. The hydraulic power generating apparatus according to any one of claims 1 to 5,
wherein the float (3) comprises a first envelope (33) and a second envelope (34) coupled with a lower portion of the first envelope (33), a liquid is put into the first envelope (33), and a gas is put into the second envelope (34).

7. A hydraulic power generating system comprising a pair of hydraulic power generating apparatuses (WG1), (WG2) according to any one of claims 1 to 6,
wherein one of the pair of hydraulic power generating apparatuses (WG1), (WG2) is determined as a first hydraulic power generating apparatus (WG1), the other of the same is determined as a second hydraulic power generating apparatus (WG2), a water supply portion of the second hydraulic power generating apparatus (WG2) is connected to a drain portion of the first hydraulic power generating apparatus (WG1) through a head that enables water supply, a pump (P) is interposed between a drain portion of the second hydraulic power generating apparatus (WG2) and a water supply portion of the first hydraulic power generating apparatus, at least a part of water discharged from the second hydraulic power generating apparatus is circulated and supplied to the first hydraulic power generating apparatus (WG1), and the first and second hydraulic power generating apparatuses (WG1), (WG2) are operated while shifting their timings for water supply and drainage.

8. A fluid power generating system,
wherein water tanks (1) of a plurality of hydraulic power generating apparatuses (LG1) (LG2) (LG3) according to any one of claims 1 to 6 are directly coupled with each other, and multistage generation is carried out.
